(19) Europäisches Patentamt
European Patent Office
Office européen des brevets

(11) **EP 3 515 990 B1**

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(51) Int Cl.:
**C08L 97/02** *(2006.01)*

(21) Anmeldenummer: **17764837.5**

(22) Anmeldetag: **13.09.2017**

(86) Internationale Anmeldenummer:
**PCT/EP2017/072987**

(87) Internationale Veröffentlichungsnummer:
**WO 2018/054732 (29.03.2018 Gazette 2018/13)**

(54) **VERFAHREN ZUR HERSTELLUNG VON LIGNOCELLULOSEWERKSTOFFEN**

METHOD FOR MANUFACTURING LIGNOCELLULOSE WORKPIECES

PROCÉDÉ DE FABRICATION DE MATÉRIAUX EN LIGNOCELLULOSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **23.09.2016 EP 16190412**

(43) Veröffentlichungstag der Anmeldung:
**31.07.2019 Patentblatt 2019/31**

(73) Patentinhaber: **BASF SE**
**67056 Ludwigshafen am Rhein (DE)**

(72) Erfinder:
• **WEINKOETZ, Stephan**
**67434 Neustadt (DE)**

• **LINDNER, Jean-Pierre Berkan**
**68167 Mannheim (DE)**
• **LUNKWITZ, Ralph**
**67434 Neustadt (DE)**
• **FUEGER, Claus**
**66969 Lemberg (DE)**

(74) Vertreter: **BASF IP Association**
**BASF SE**
**G-FLP-C006**
**67056 Ludwigshafen (DE)**

(56) Entgegenhaltungen:
**WO-A1-2014/005877 WO-A2-2015/104349**

**Beschreibung**

Die vorliegende Erfindung betrifft ein Verfahren zur Herstellung von ein- oder mehrschichtigen Lignocellulosewerkstoffen, in dem spezielle Bedingungen in Abhängigkeit von der Temperatur einer Mischung eingehalten werden.

Aus der EP-B-1 852 231 ist ein Verfahren zur Herstellung von Holzwerkstoffen aus Zerkleinerungsprodukten von Lignocellulose-haltigen Materialien und einem Klebstoff bekannt, wobei den Zerkleinerungsprodukten vor dem Heißpressen mindestens ein Additiv der Komponente C, ausgewählt aus der Gruppe Maleinsäureanhydrid, Fumarsäure, Acrylsäure, Polyacrylate, Homologe der Acrylsäure oder deren Gemische, zugefügt wird. Dabei kann die Komponente C nach dem Refiner den Fasern z.B. zusammen mit dem Einblasen des Klebstoffes beigemischt werden. Als Klebstoffe werden u.a. Aminoplastharze wie Harnstoff-Formaldehydharze (UF-Harze), Klebstoffe auf Basis von Isocyanaten (PMDI) oder ein Gemisch hiervon genannt.

Aus der WO-A-2015/000913 ist ein Verfahren zur Herstellung von Lignocellulosewerkstoffen bekannt, bei dem die Holzspäne mit einem Bindemittel und einem Härter beleimt werden, wobei der Härter bevorzugt kurz vor der Verwendung der Bindemittel zugesetzt wird. Als Bindemittel werden u.a. Aminoplastharze, organische Isocyanate mit mindestens zwei Isocyanatgruppen (wie PMDI) oder deren Gemische, als Härter alle dem Fachmann bekannten Härter oder deren Gemische, insbesondere Carbonsäuren, Sulfonsäuren, Phosphorsäure, Polyphosphorsäure oder deren Salze wie Halogenide genannt.

Diese Verfahren lassen in Bezug auf ihre Herstellprozesse zu wünschen übrig.

Der vorliegenden Erfindung lag daher die Aufgabe zugrunde, den zuvor genannten Nachteilen abzuhelfen.

Demgemäß wurde ein neues und verbessertes diskontinuierliches oder kontinuierliches, bevorzugt kontinuierliches Verfahren zur Herstellung von ein- oder mehrschichtigen Lignocellulosewerkstoffen enthaltend die Verfahrensschritte

(Ia) Herstellung einer Mischung M1 und

(Ib) gegebenenfalls einer oder mehrerer Mischung(en) M2,

(II) Streuen der Mischung M1 und gegebenenfalls der Mischung(en) M2 zu einer Matte,

(III) gegebenenfalls Vorverdichtung der gestreuten Matte und

(IV) Heißpressen,

gefunden, welches dadurch gekennzeichnet ist, dass die Mischung M1 die Lignocellulosepartikel (Komponente LCP-1) und zusätzlich

a) 0,005 bis 0,5 Gew.-% organische Carbonsäure, Carbonsäureanhydrid, Carbonsäurechlorid oder deren Gemische (Komponente A)

b) 0,05 bis 3 Gew.-% organische Isocyanate mit mindestens zwei Isocyanatgruppen (Komponente B) und

c) 5 bis 15 Gew.-% Bindemittel, ausgewählt aus der Gruppe der Aminoplastharze (Komponente C)

d) 0 bis 2 Gew.-% Härter (Komponente D) und

e) 0 bis 5 Gew.-% Additiv (Komponente E),

und die Mischung(en) M2 die Lignocellulosepartikel (Komponente LCP-2) und zusätzlich

f) 0 bis 0,3 Gew.-% organische Carbonsäure, Carbonsäureanhydrid, Carbonsäurechlorid oder deren Gemische (Komponente F),

g) 1 bis 30 Gew.-% Bindemittel ausgewählt aus der Gruppe bestehend aus Aminoplastharz, Phenoplastharz, Protein-basiertem Bindemittel und anderem Polymer-basierten Bindemittel oder deren Gemische (Komponente G-1) und 0 bis 3 Gew.-% organisches Isocyanat mit mindestens zwei Isocyanatgruppen (Komponente G-2),

h) 0 bis 2 Gew.-% Härter (Komponente H) und

i) 0 bis 5 Gew.-% Additiven (Komponente I)

enthält, bevorzugt daraus besteht,

mit der Maßgabe, dass die folgenden Bedingungen erfüllt sind:

$$a_{min} < a < a_{max}$$

und

$a_{min} = [(- 1/6000 \bullet T) + (65/6000)]$, bevorzugt $a_{min} = [(- 1/4500 \bullet T) + (65/4500)]$, besonders bevorzugt $a_{min} = [(- 1/3500 \bullet T) + (65/3500)]$

und

$$a_{max} = [(- 1/2000 \cdot T) + (75/2000)], \text{ bevorzugt } a_{max} = [(- 1/2500 \cdot T) + (75/2500)], \text{ besonders bevorzugt } a_{max} = [(- 1/3000 \cdot T) + (75/3000)],$$

wobei

T die Temperatur der Mischung M1 in °C nach dem Verfahrensschritt (Ia) ist und diese zwischen 10 und 65°C, bevorzugt 12 und 62°C, besonders bevorzugt 15 bis 60°C liegt und a die Menge an Säureäquivalenten der Komponente A) im Verhältnis zur Masse an Komponente C) in mol/100 g ist.

Unter der Menge an Säureäquivalenten der Komponente A) wird in der vorliegenden Erfindung bei Carbonsäuren die Menge an Carbonsäuregruppen in mol und bei Carbonsäurechloriden die Menge an Carbonsäurechloridgruppen in mol verstanden. Bei Carbonsäureanhydriden wird die Menge der Carbonsäureanhydridgruppen in mol mit zwei multipliziert, um die Mengean Säureäquivalenten in mol zu erhalten. Wird beispielsweise Essigsäure als Komponente A) eingesetzt, dann beträgt die Menge an Säureäquivalenten der Komponente A) x mol pro x mol Essigsäure. Wird beispielsweise Maleinsäureanhydrid als Komponente A) eingesetzt, dann beträgt die Menge an Säureäquivalenten der Komponente A) 2x mol pro x mol Maleinsäureanhydrid.

Unter Menge an Säureäquivalenten der Komponente A) im Verhältnis zur Masse an Komponente C) wird die Menge der Säureäquivalente pro 100 g Komponente C) verstanden, wobei sich die 100 g auf den Feststoffgehalt des/der Aminoplastharze(s) der Komponente C) beziehen.

Die Temperatur T der Mischung M1 nach dem Verfahrensschritt (Ia) ist die Temperatur, die sich 1 bis 120 Sekunden, bevorzugt 1 bis 60 Sekunden, besonders bevorzugt 1 bis 20 Sekunden, ganz besonders bevorzugt 10 Sekunden nachdem alle Komponenten A) bis E) mit LCP-1 vermischt sind, einstellt. Die Messung der Temperatur T kann entweder mittels Berührungsthermometer oder mittels berührungslos messende Thermometer erfolgen, bevorzugt mittels berührungslos messende Thermometer. Geeignete Messgeräte sind beispielsweise Strahlungsthermometer, beispielsweise die Strahlungsthermometer der Baureihe KTX der Heitronix Infrarot Messtechnik GmbH. Die Messung der Temperatur kann auch zu einem früheren oder späteren Zeitpunkt im Verfahren erfolgen und daraus die Temperatur T abgeleitet werden, indem beispielsweise das Abkühlverhalten der Mischung M1 berücksichtigt wird, oder die Temperaturen der zugegebenen Komponenten.

Zur Veranschaulichung der Erfindung werden im Folgenden einige Beispiele dargestellt: Wird beispielsweise eine Mischung M1 mit einer Temperatur T von 50°C hergestellt und dazu 1000 g LCP-1) und 100 g Komponente C) eingesetzt, dann bedeutet zum Beispiel $a_{min} = [(- 1/3500 \cdot 50) + (65/3500)] = 0{,}00429$, dass mehr als 0,00429 mol Säureäquivalente pro 100 g Komponente C) eingesetzt werden. Wird hierbei beispielsweise Essigsäure (Molgewicht = 60,1 g/mol) als Komponente A) eingesetzt heißt das, dass pro 100 g Komponente C) mehr als 0,00429 mol • 60,1 g/mol / 1 = 0,258 g Essigsäure eingesetzt werden. Wird anstelle von Essigsäure Maleinsäureanhydrid (Molgewicht = 98,1 g/mol) eingesetzt, ergibt sich bei gleichem $a_{min}$ (= 0,00429), dass pro 100 g Komponente C) mehr als 0,00429 mol • 98,1 g/mol / 2 = 0,210 g Maleinsäureanhydrid eingesetzt werden.

Die Angaben der Gew.-% der Komponenten A) bis E) bzw. F) bis I) sind die Gewichtsprozente der jeweiligen Komponente bezogen auf das Trockengewicht der Lignocellulosepartikel (Komponente LCP-1 bzw. Komponente LCP-2). Das Trockengewicht der Lignocellulosepartikel wird dabei immer auf 100 Gew.-% gesetzt. Die Gewichtsprozente der Komponenten A) bis E) bzw. F) bis I) addieren sich zu diesen 100 Gew.-%. Das Trockengewicht der Lignocellulosepartikel ist das Gewicht der Lignocellulosepartikel ohne das darin enthaltene Wasser. Es wird auch als atro-Gewicht (absolut trocken) bezeichnet. Enthalten die Komponenten A) bis E) und F) bis I) Wasser, werden sie also beispielsweise in Form von wässrigen Lösungen oder Emulsionen eingesetzt, dann wird das Wasser bei den Gewichtsangaben nicht berücksichtigt. Werden beispielsweise 5 kg 30%ige Ammoniumnitrat-Lösung als Komponente D) pro 100 kg Lignocellulosepartikel (Trockengewicht) eingesetzt, dann ergeben sich 1,5 Gew.-% Ammoniumnitrat. Bei den Aminoplastharzen (Komponente C oder G-1) und bei den Phenoplastharzen (Komponente G-1) wird das Gewicht auf den Feststoffgehalt bezogen. Der Feststoffgehalt von Aminoplast- oder Phenoplastharzen wird bestimmt, indem 1 g des Harzes in eine Wägschale eingewogen, 2 Stunden bei 120°C +/- 2 °C in einem Trockenschrank getrocknet und der Rückstand nach Temperierung auf Raumtemperatur in einem Exsikkator gewogen wird (Zeppenfeld, Grunwald, Klebstoffe in der Holz- und Möbelindustrie, DRW Verlag, 2. Auflage, 2005, Seite 286).

Zusätzlich enthalten alle Schichten Wasser, das bei den Gewichtsangaben nicht berücksichtigt wird.

Das Wasser kann aus der-in den Lignocellulosepartikeln LCP-1) bzw. LCP-2) enthaltenen-Restfeuchte, aus den Bindemitteln B), C) bzw. G-1), G-2) (beispielsweise wenn das isocyanathaltige Bindemittel als wässrige Emulsion vorliegt oder wenn wässrige Aminoplastharze eingesetzt werden), aus zusätzlich zugegebenem Wasser (beispielsweise zum Verdünnen der Bindemittel oder zum Befeuchten der Deckschichten), aus den Additiven E) bzw. I) (beispielsweise wässrige Paraffinemulsionen) oder aus den Härtern D) bzw. H) (beispielsweise wässrige Ammoniumsalzlösungen) stammen. Der Wassergehalt der einzelnen Schichten kann bis zu 20 Gew.-%, also 0 bis 20 Gew.-%, bevorzugt 2 bis 15 Gew.-%, besonders bevorzugt 4 bis 10 Gew.-% bezogen auf 100 Gew.-% Gesamttrockengewicht betragen. Bevorzugt ist der Wassergehalt in den Deckschichten DS-A und DS-C größer als im Kern-B.

Der Aufbau der mehrschichtigen Lignocellulosewerkstoffe folgt folgendem Muster:

(A) Deckschicht (DS-A), die obere Deckschicht,
(B) Kern (Kern-B) und
(C) Deckschicht (DS-C), die untere Deckschicht,

wobei die Deckschichten DS-A und DS-C jeweils aus einer oder mehreren, also 1 bis 5, bevorzugt 1 bis 3, besonders bevorzugt 1 bis 2 Schichten, ganz besonders bevorzugt eine Schicht, gleicher oder unterschiedlicher Zusammensetzungen aufgebaut sein können und die Zusammensetzungen Deckschichten DS-A und DS-C gleich oder unterschiedlich, bevorzugt gleich sind.

Die einschichtigen Lignocellulosewerkstoffe bestehen nur aus einer Schicht, die dem Kern (Kern-B) entspricht, und besitzen keine Deckschicht DS-A und DS-C.

Bevorzugt sind mehrschichtige, ganz besonders bevorzugt dreischichtige Lignocellulosewerkstoffe, also solche, die aus einem Kern und einer oberen und einer unteren Deckschicht aufgebaut sind.

Zusätzlich zu den Deckschichten kann der mehrschichtige Lignocellulosewerkstoff weitere äußere "Schutzschichten" enthalten, bevorzugt zwei weitere äußere Schichten, also eine obere Schutzschicht, die an die Deckschicht DS-A (bei einer Schicht) bzw. an die oberste der oberen Deckschichten DS-A (bei mehreren Schichten) angrenzt und eine untere Schutzschicht, die an die die Deckschicht DS-C (bei einer Schicht) bzw. die unterste der unteren Deckschichten DS-C (bei mehreren Schichten) angrenzt, die eine beliebige Zusammensetzung aufweisen.

Diese Schutzschichten sind deutlich dünner als die Deckschichten. Das Massenverhältnis zwischen Schutzschichten und Deckschichten ist kleiner als 10:90, bevorzugt kleiner als 5:95. Ganz besonders bevorzugt sind keine Schutzschichten vorhanden.

Der einschichtige Lignocellulosewerkstoff kann zusätzlich zu der Schicht Kern-B äußere Schutzschichten enthalten, bevorzugt zwei weitere äußere Schichten, also eine obere Schutzschicht und eine untere Schutzschicht, die an Schicht Kern-B angrenzen, die eine beliebige Zusammensetzung aufweisen. Das Massenverhältnis zwischen Schutzschichten und Kern-B ist kleiner als 5:95, bevorzugt kleiner als 2:98. Ganz besonders bevorzugt sind keine Schutzschichten vorhanden.

Als ein- oder mehrschichtigen Lignocellulosewerkstoffen eignen sich beispielsweise balkenförmige oder plattenförmige Produkte wie Balken oder Platten hergestellt aus Lignocecllulosepartikeln, bevorzugt plattenförmige Produkte wie Platten hergestellt aus Lignocecllulosepartikeln.

Das erfindungsgemäße Verfahren zur Herstellung von Lignocellulosewerkstoffen umfasst folgende Verfahrensschritte:

Ia) Herstellung der Mischung der Lignocellulosepartikel (Komponente LCP-1) mit den Komponenten für einschichtige Lignocellulosewerkstoffe bzw. für den Kern von mehrschichtigen Lignocellulosewerkstoffen,
(Ib) gegebenenfalls Herstellung der Mischungen der Lignocellulosepartikel (Komponente LCP-2) mit den Komponenten für die äußeren Schichten von mehrschichtigen Lignocellulosewerkstoffen,

(II) Streuen der in den Verfahrensschritten (Ia) und gegebenenfalls (Ib) hergestellten Mischung(en) zu einer Matte,
(III) gegebenenfalls Vorverdichtung der gestreuten Matte und
(IV) Heißpressen der gegebenenfalls vorverdichteten Matte

Komponenten, die auch 0 Gew.-% sein können, sind nur gegebenenfalls in den Lignocellulosewerkstoffen bzw. in den hierin beschriebenen Mischungen enthalten.

Das erfindungsgemäße Verfahren lässt sich wie folgt durchführen:

Verfahrensschritte (Ia) und (Ib) - Herstellung der Mischungen für die einzelnen Schichten:

Die Komponenten LCP-1), A), B), C),, D) und E) (Zusammensetzung des Kerns) und ggf. die Komponenten LCP-2), F), G-1), G-2), H), und I) (Zusammensetzung der Deckschichten) werden in separaten Mischvorgängen gemischt, wobei in der Regel jeweils die Lignocellulosepartikel [Komponente LCP-1) bzw. ggf. Komponente LCP-2)] vorgelegt und die restlichen Komponenten A), B), C), D) und E) bzw. ggf. F), G-1), G-2), H) und I) in beliebiger Reihenfolge zugegeben werden.

Es ist auch möglich Gemische der einzelnen Komponenten A), B), C), D) und E) zu verwenden, also beispielsweise die Komponenten D) und E) zu mischen, bevor beide Komponenten gemeinsam den Lignocellulosepartikeln LCP-1) zugemischt werden. Die Komponenten A), B), C), D) und E) können dabei in Portionen aufgeteilt werden und diese Portionen zu unterschiedlichen Zeitpunkten einzeln oder im Gemisch den Lignocellulosepartikeln LCP-1) zugemischt werden. Wenn die Komponente, die in Portionen aufgeteilt wird, aus mehreren unterschiedlichen Stoffen besteht, können die einzelnen Portionen unterschiedliche Zusammensetzungen haben. Diese Möglichkeiten bestehen analog auch bei mehrschichtigen Holzwerkstoffen für die Komponenten F), G-1), G-2), H) und I) in den Deckschichten.

In einer bevorzugten Ausführungsform wird nur eine Mischung für die Deckschichten hergestellt und diese Mischung für die beiden Deckschichten (DS-A und DS-C) entsprechend ihres Gewichtsverhältnisses aufgeteilt.

Ferner ist es möglich, dass die Komponenten LCP-1) bzw. LCP-2) aus Mischungen unterschiedlicher Holzarten und/oder Partikelgrößen zusammengesetzt sind. In einer bevorzugten Ausführungsform sind bei mehrschichtigen Holzwerkstoffen die mittleren Partikelgrößen der Komponente LCP-1) größer als diejenigen der Komponente LCP-2).

Verfahrensschritt (Ia) - Herstellung der Mischung M1

Die Komponente C), die gegebenenfalls in einem separaten Schritt mit einer oder mehreren Komponenten ausgewählt aus den Gruppen der Komponenten B), D) und E) gemischt wurde, und die Komponente A) bzw. die Mischung der Komponente A) mit Komponente B) [Mischung AB)] bzw. die Mischung der Komponente A) mit Komponente B) und Komponente E) [Mischung ABE)], können entweder

(1) getrennt voneinander oder
(2) als Mischung,

bevorzugt als Mischung zu den Lignocellulosepartikeln LCP-1) bzw. zu der Mischung aus Lignocellulosepartikeln LCP-1) mit einer oder mehreren Komponenten ausgewählt aus den Gruppen der Komponenten B), D) und E) gegeben werden.

(1) getrennt voneinander

Unter einer Zugabe, die getrennt voneinander erfolgt, wird hierbei verstanden, dass die Komponente C) [bzw. die Mischung der Komponente C) mit einer oder mehreren Komponenten ausgewählt aus der Gruppe der Komponenten B), D) und E)] und die Komponente A) bzw. Mischung AB) bzw. die Mischung ABE) mit Hilfe von separaten Auftragsvorrichtungen, z.B. Düsen oder Auftragsteller, zu den Lignocellulosepartikeln LCP-1) bzw. zu der Mischung aus Lignocellulosepartikeln LCP-1) mit einer oder mehreren Komponenten ausgewählt aus den Gruppen der Komponenten B), D) und E) gegeben werden. Die Auftragsvorrichtungen können dabei räumlich so angeordnet sein oder zeitlich so geschaltet werden, dass die Zugabe der Komponente C [bzw. der Mischung der Komponente C) mit einer oder mehreren Komponenten ausgewählt aus der Gruppe der Komponenten B), D) und E)] und die Zugabe der Komponente A) bzw. der Mischung AB) bzw. der Mischung ABE) nacheinander in beliebiger Reihenfolge, erfolgt. Bevorzugt sind die Auftragsvorrichtungen so angeordnet, dass die Komponente C) [bzw. die Mischung der Komponente C) mit einer oder mehreren Komponenten ausgewählt aus der Gruppe der Komponenten B), D) und E)] und die Komponente A) bzw. die Mischung AB) bzw. die Mischung ABE) bevorzugt die Mischung AB) oder die Mischung ABE), ganz besonders bevorzugt die Mischung AB), gleichzeitig zu den Lignocellulosepartikeln LCP-1) bzw. zu der Mischung aus Lignocellulosepartikeln LCP-1) mit einer oder mehreren Komponenten ausgewählt aus den Gruppen der Komponenten B), D) und E) gegeben werden. In der Regel wird das dadurch realisiert, dass die Auftragsvorrichtungen sich in unmittelbarer räumlicher Nähe befinden. Dabei können die Auftragsvorrichtungen in einer bevorzugten Ausführungsform auch so ausgerichtet sein, dass sich die Komponenten schon auf dem Weg von den Auftragsvorrichtungen zu den Lignocellulosepartikeln LCP-1) teilweise oder vollständig mischen.

Ist die Komponente B) sowohl Bestandteil der Mischung der Komponente C) mit einer oder mehreren Komponenten ausgewählt aus der Gruppe der Komponenten B), D) und E) also Bestandteil der Mischung AB) bzw. der Mischung ABE), dann ist das so zu verstehen, dass in beiden Mischungen eine Teilmenge von B) eingesetzt wird. Darüber hinaus kann B) auch als weitere Teilmenge separat (also nicht als Bestandteil dieser beiden Mischungen) eingesetzt werden.

(2) als Mischung

Die Zugabe als Mischung kann beispielsweise dadurch erfolgen, dass die Komponente C) bzw. die Mischung, die Komponente C) enthält und die Komponente A) bzw. die Mischung, die Komponente A) enthält bzw. die Mischung, die Komponente A) und Komponente B) enthält, bevorzugt die Mischung, die Komponente A) und Komponente B) enthält aus separaten Behältern einem Mischaggregat, z.B. Mischbehälter oder statischem Mischer, zugeführt und darin gemischt werden und die so erhaltene Mischung innerhalb von 0,1 bis 3600 Sekunden, bevorzugt 0,1 bis 300 Sekunden, besonders bevorzugt 0,1 bis 60 Sekunden, insbesondere 0,1 bis 10 Sekunden, ganz besonders bevorzugt 0,1 bis 2 Sekunden zu den Lignocellulosepartikeln LCP-1) bzw. zu der Mischung aus Lignocellulosepartikeln LCP-1) mit einer oder mehreren Komponenten ausgewählt aus den Gruppen der Komponenten B), D) und E) zugegeben wird. Die angegebenen Zeiträume beziehen sich auf die Zeiten von dem Inkontaktbringen der Komponente C) bzw. der Mischung die die Komponente C) enthält mit der Komponente A) bzw. der Mischung, die Komponente A) enthält bzw. der Mischung, die Komponente A) und Komponente B) enthält, im Mischaggregat bis zu dem Inkontaktbringen der im Mischaggregat hergestellten Mischung, die C) und A) enthält, mit den Lignocellulosepartikeln LCP-1). Die Zugabe der Mischung zu den Lignocellulosepartikeln LCP-1) bzw. zu der Mischung aus Lignocellulosepartikeln LCP-1) mit einer oder mehreren Komponenten ausgewählt aus den Gruppen der Komponenten B), D) und E) kann mit Hilfe von üblichen Auftragsvorrichtungen, z.B. Düsen oder Auftragsteller, erfolgen.

Die Komponenten A), B), C), D) und E) können auch auf Teilmengen aufgeteilt werden. Diese Teilmengen können zu unterschiedlichen Zeitpunkten und in Abmischungen mit unterschiedlichen Komponenten zugegeben werden.

Ausführungsformen für (1) getrennt voneinander

Beispielsweise kann man Komponente LCP-1) vorlegen, mit der Komponente C) mischen, und anschließend

- Komponente D) und anschließend die Komponenten A) und B), gemeinsam oder in beliebiger Reihenfolge, bevorzugt gemeinsam und anschließend die Komponenten E) oder
- Komponente E) und anschließend die Komponenten A) und B), gemeinsam oder in beliebiger Reihenfolge, bevorzugt gemeinsam und anschließend die Komponenten D) oder
- die Komponenten D) und E) gemeinsam oder in beliebiger Reihenfolge, und anschließend die Komponente A) und die Komponenten B) gemeinsam oder in beliebiger Reihenfolge, bevorzugt gemeinsam oder
- die Komponenten A) und B) gemeinsam oder in beliebiger Reihenfolge, bevorzugt gemeinsam, und anschließend die Komponenten D) und E) gemeinsam oder in beliebiger Reihenfolge
zugeben.

Beispielsweise kann man Komponente LCP-1) vorlegen, mit der Komponente C) und Komponente D) gemeinsam oder in beliebiger Reihenfolge mischen, und anschließend

- die Komponenten E) und anschließend die Komponente A) und B), gemeinsam oder in beliebiger Reihenfolge, bevorzugt gemeinsam, oder
- die Komponente A) und B), gemeinsam oder in beliebiger Reihenfolge, bevorzugt gemeinsam, und anschließend die Komponente E)
zugeben.

Beispielsweise kann man Komponente LCP-1) vorlegen, mit der Komponente C) mischen, und anschließend

- Komponente D) und anschließend die Komponente E) und eine Mischung der Komponenten A) und B), gemeinsam oder in beliebiger Reihenfolge, bevorzugt gemeinsam oder
- Komponente E) und eine Mischung der Komponenten A) und B), gemeinsam oder in beliebiger Reihenfolge, bevorzugt gemeinsam, und anschließend die Komponente D) zugeben.

Beispielsweise kann man Komponente LCP-1) vorlegen, mit der Komponente C) mischen, und anschließend

- Komponente D) und eine Teilmenge der Komponente E), gemeinsam oder in beliebiger Reihenfolge, und anschließend eine weitere Teilmenge der Komponente E) und eine Mischung der Komponenten A) und B), gemeinsam oder in beliebiger Reihenfolge, bevorzugt gemeinsam oder
- eine Teilmenge der Komponente E) und eine Mischung der Komponenten A) und B), gemeinsam oder in beliebiger Reihenfolge, bevorzugt gemeinsam, und anschließend eine weitere Teilmenge der Komponente E) und die Komponente D), gemeinsam oder in beliebiger Reihenfolge,
zugeben.

Beispielsweise kann man Komponente LCP-1) vorlegen, mit der Komponente C) und Komponente D) und einer Teilmenge der Komponente A), gemeinsam oder in beliebiger Reihenfolge mischen, und anschließend

- die Komponente E) und anschließend eine weitere Teilmenge der Komponente A) und die Komponente B), gemeinsam oder in beliebiger Reihenfolge, bevorzugt gemeinsam, oder
- eine weitere Teilmenge der Komponente A) und die Komponente B), gemeinsam oder in beliebiger Reihenfolge, bevorzugt gemeinsam, und anschließend die Komponente E) zugeben.

Beispielsweise kann man Komponente LCP-1) vorlegen, mit der Komponente E) und der Komponente C), gemeinsam oder in beliebiger Reihenfolge, mischen, und anschließend

- Komponente D) und anschließend die Komponenten A) und B), gemeinsam oder in beliebiger Reihenfolge, bevorzugt gemeinsam oder
- die Komponenten A) und B) gemeinsam oder in beliebiger Reihenfolge, bevorzugt gemeinsam, und anschließend die Komponente D)

zugeben.

Beispielsweise kann man Komponente LCP-1) vorlegen, mit der Komponente A) und Komponente B) gemeinsam oder in beliebiger Reihenfolge mischen, bevorzugt gemeinsam, und anschließend

- die Komponenten E) und anschließend die Komponente C) und D), gemeinsam oder in beliebiger Reihenfolge, bevorzugt gemeinsam, oder
- die Komponente C) und D), gemeinsam oder in beliebiger Reihenfolge, bevorzugt gemeinsam, und anschließend die Komponente E)

zugeben.

Beispielsweise kann man Komponente LCP-1) vorlegen, mit der Komponente E) mischen, und anschließend

- Komponente C) und Komponente D) gemeinsam oder in beliebiger Reihenfolge, bevorzugt gemeinsam, und anschließend die Komponente A) und B), gemeinsam oder in beliebiger Reihenfolge, bevorzugt gemeinsam, oder
- die Komponente A) und B), gemeinsam oder in beliebiger Reihenfolge, bevorzugt gemeinsam, und anschließend Komponente C) und Komponente D) gemeinsam oder in beliebiger Reihenfolge

zugeben.

Beispielsweise kann man Komponente LCP-1) vorlegen, mit der Komponente A) und eine erste Teilmenge der Komponente B) gemeinsam oder in beliebiger Reihenfolge mischen, bevorzugt gemeinsam, und anschließend

- die Komponenten E) und anschließend die Komponente C) und D), gemeinsam oder in beliebiger Reihenfolge, bevorzugt gemeinsam, oder
- die Komponente C) und D), gemeinsam oder in beliebiger Reihenfolge, bevorzugt gemeinsam, und anschließend die Komponente E)

zugeben, wobei die zweite Teilmenge der Komponente B) zu einem beliebigen Zeitpunkt, bevorzugt vor oder nach, besonders bevorzugt nach, Zugabe der Komponente A) und der ersten Teilmenge B), zugegeben wird.

Beispielsweise kann man Komponente LCP-1) vorlegen, mit der Komponente E) mischen, und anschließend

- Komponente C) und Komponente D) gemeinsam oder in beliebiger Reihenfolge, bevorzugt gemeinsam, und anschließend die Komponente A) und eine erste Teilmenge der Komponente B), gemeinsam oder in beliebiger Reihenfolge, bevorzugt gemeinsam, oder
- die Komponente A) und eine Teilmenge der Komponente B), gemeinsam oder in beliebiger Reihenfolge, bevorzugt gemeinsam, und anschließend Komponente C) und Komponente D) gemeinsam oder in beliebiger Reihenfolge

zugeben, wobei die zweite Teilmenge der Komponente B) zu einem beliebigen Zeitpunkt, bevorzugt vor oder nach, besonders bevorzugt nach, Zugabe der Komponente A) und der ersten Teilmenge B) zugegeben wird.

Bevorzugt wird Komponente LCP-1) vorgelegt, mit der Komponente C) und Komponente D) gemeinsam oder in beliebiger Reihenfolge gemischt, und anschließend

- die Komponenten E) und anschließend die Komponente A) und B), gemeinsam oder in beliebiger Reihenfolge, bevorzugt gemeinsam, oder
- die Komponente A) und B), gemeinsam oder in beliebiger Reihenfolge, bevorzugt gemeinsam, und anschließend die Komponente E)

zugeben.

Weiterhin bevorzugt wird Komponente LCP-1) vorgelegt, mit der Komponente A) und Komponente B) gemeinsam oder in beliebiger Reihenfolge gemischt, bevorzugt gemeinsam, und anschließend

- die Komponenten E) und anschließend die Komponente C) und D), gemeinsam oder in beliebiger Reihenfolge, bevorzugt gemeinsam, oder
- die Komponente C) und D), gemeinsam oder in beliebiger Reihenfolge, bevorzugt gemeinsam, und anschließend die Komponente E)

zugeben.

Weiterhin bevorzugt wird Komponente LCP-1) vorgelegt, mit der Komponente E) gemischt, und anschließend

- Komponente C) und Komponente D) gemeinsam oder in beliebiger Reihenfolge, bevorzugt gemeinsam, und anschließend die Komponente A) und B), gemeinsam oder in beliebiger Reihenfolge, bevorzugt gemeinsam, oder
- die Komponente A) und B), gemeinsam oder in beliebiger Reihenfolge, bevorzugt gemeinsam, und anschließend Komponente C) und Komponente D) gemeinsam oder in beliebiger Reihenfolge

zugeben.

Ausführungsformen für (2) als Mischung

Beispielsweise kann man Komponente LCP-1) vorlegen, mit der Komponente E) mischen, und anschließend eine Mischung der Komponenten A), B), C) und D) zugeben.

Beispielsweise kann man Komponente LCP-1) vorlegen, mit einer Mischung der Komponenten A), B), C) und D) mischen, und anschließend die Komponente E) zugeben.

Beispielsweise kann man Komponente LCP-1) vorlegen, mit einer Teilmenge der Komponente E) mischen, und anschließend eine Mischung einer weiteren Teilmenge der Komponente E) und der Komponenten A), B), C) und D) zugeben.

Beispielsweise kann man Komponente LCP-1) vorlegen, mit einer Mischung einer Teilmenge der Komponente E) und der Komponenten A), B), C) und D) mischen, und anschließend eine weitere Teilmenge der Komponente E) zugeben.

Beispielsweise kann man Komponente LCP-1) vorlegen, mit einer Mischung der Komponente C) und der Komponente A) mischen, und anschließend

- die Komponente B), und anschließend
- die Komponente D) und E) gemeinsam oder in beliebiger Reihenfolge zugeben.

Beispielsweise kann man Komponente LCP-1) vorlegen, mit einer Mischung der Komponenten A), C) und D) mischen, und anschließend die Komponente B) und E), gemeinsam oder in beliebiger Reihenfolge, zugeben.

Beispielsweise kann man Komponente LCP-1) vorlegen, mit einer Mischung der Komponente A), B) und C) mischen, und anschließend die Komponenten D) und E), gemeinsam oder in beliebiger Reihenfolge, zugeben.

Beispielsweise kann man Komponente LCP-1) vorlegen, mit den Komponenten D) und E), gemeinsam oder in beliebiger Reihenfolge, mischen und anschließend eine Mischung der Komponenten A), B) und C) zugeben.

Beispielsweise kann man Komponente LCP-1) vorlegen, mit der Komponente D) mischen, anschließend eine Mischung der Komponenten A), B) und C) und anschließend die Komponente E) zugeben.

Beispielsweise kann man Komponente LCP-1) vorlegen, mit der Komponente E) mischen, anschließend eine Mischung der Komponenten A), B) und C) und anschließend die Komponente D) zugeben.

Beispielsweise kann man Komponente LCP-1) vorlegen, mit einer Mischung einer ersten Teilmenge der Komponente B) mit den Komponenten A) und C) mischen, und anschließend die Komponenten D) und E), gemeinsam oder in beliebiger Reihenfolge, zugeben, wobei eine zweite Teilmenge der Komponente B) zu einem beliebigen Zeitpunkt, bevorzugt vor der Zugabe der Komponenten D) und E), zugegeben wird.

Beispielsweise kann man Komponente LCP-1) vorlegen, mit den Komponenten D) und E), gemeinsam oder in beliebiger Reihenfolge, mischen und anschließend eine Mischung einer ersten Teilmenge der Komponente B) mit den Komponenten A) und C) zugeben, wobei eine zweite Teilmenge der Komponente B) zu einem beliebigen Zeitpunkt, bevorzugt nach der Zugabe der Komponenten D) und E), zugegeben wird.

Beispielsweise kann man Komponente LCP-1) vorlegen, mit der Komponente D) mischen, anschließend eine Mischung einer ersten Teilmenge der Komponente B) mit den Komponenten A) und C) und anschließend die Komponente E) zugeben, wobei eine zweite Teilmenge der Komponente B) zu einem beliebigen Zeitpunkt, bevorzugt vor der Zugabe der E), zugegeben wird. Beispielsweise kann man Komponente LCP-1) vorlegen, mit der Komponente E) mischen, anschließend eine Mischung einer ersten Teilmenge der Komponente B) mit den Komponenten A) und C) und anschließend die Komponente D) zugeben, wobei eine zweite Teilmenge der Komponente B) zu einem beliebigen Zeitpunkt, bevorzugt vor der Zugabe der Komponente D), zugegeben wird.

Beispielsweise kann man Komponente LCP-1) vorlegen, mit einer Mischung der Komponenten A), C) und D) mischen, und anschließend die Komponente B) und E), gemeinsam oder in beliebiger Reihenfolge, zugeben.

In einer bevorzugten Ausführungsform kann man Komponente LCP-1) vorlegen, mit der Komponente E) mischen, und anschließend eine Mischung der Komponenten A), B), C) und D) zugeben.

In einer weiteren bevorzugten Ausführungsform kann man Komponente LCP-1) vorlegen, mit einer Mischung der Komponenten A), B), C) und D) mischen, und anschließend die Komponente E) zugeben.

In einer weiteren bevorzugten Ausführungsform kann man Komponente LCP-1) vorlegen, mit einer Teilmenge der Komponente E) mischen, und anschließend eine Mischung einer weiteren Teilmenge der Komponente E) und der Komponenten A), B), C) und D) zugeben.

In einer weiteren bevorzugten Ausführungsform kann man Komponente LCP-1) vorlegen, mit einer Mischung einer Teilmenge der Komponente E) und der Komponenten A), B), C) und D) mischen, und anschließend eine weitere Teilmenge der Komponente E) zugeben.

Verfahrensschritt (Ib) - Herstellung einer oder mehrerer Mischungen M2

Die Komponente G-1), die gegebenenfalls in einem separaten Schritt mit einer oder mehreren Komponenten ausgewählt aus den Gruppen der Komponenten G-2), H) und I) gemischt wurde, und die Komponente F) bzw. die Mischung aus den Komponenten F) und G-2) bzw. die Mischung aus den Komponenten F), G-2) und I), können entweder

(1) getrennt voneinander oder

(2) als Mischung,

bevorzugt als Mischung zu den Lignocellulosepartikeln LCP-2) bzw. zu der Mischung aus Lignocellulosepartikeln LCP-2) mit einer oder mehreren Komponenten ausgewählt aus den Gruppen der Komponenten B), D) und E) gegeben werden.

Was unter (1) getrennt voneinander und (2) als Mischung zu verstehen ist, wurde bereits für die Mischung der Komponente C) [bzw. C) enthaltende Mischung] und Komponente A) bzw. Mischungen aus den Komponenten A) und B) bzw. A), B) und E) erläutert und gilt hier entsprechend.

Die Komponenten F), G-1), G-2), H) und I) können auch auf Teilmengen aufgeteilt werden. Diese Teilmengen können zu unterschiedlichen Zeitpunkten und in Abmischung(en) mit unterschiedlichen Komponenten zugegeben werden.

Beispielsweise kann man Komponente LCP-2) vorlegen, mit der Komponente G) (hier und im Folgenden ist mit Komponente G) gemeint: Komponente G-1) oder Komponenten G-1) und G-2) gemeinsam oder in beliebiger Reihenfolge) mischen, und anschließend

- Komponente H) und anschließend die Komponente F) und anschließend die Komponente I) oder
- eine Mischung aus den Komponenten H) und I) gemeinsam oder in beliebiger Reihenfolge, bevorzugt zuerst Komponente H) und anschließend die Komponente I), anschließend Komponente F) oder
- eine Mischung aus F) und H) gemeinsam oder in beliebiger Reihenfolge und anschließend die Komponente I) zugeben.

Beispielsweise kann man Komponente LCP-2) vorlegen, mit der Komponente G) und Komponente H) gemeinsam oder in beliebiger Reihenfolge mischen, und anschließend

- die Komponente F) und anschließend die Komponente I) oder
- die Komponente I) und anschließend die Komponente F) zugeben.

Beispielsweise kann man Komponente LCP-2) vorlegen, mit der Komponente I), anschließend mit der Komponente G) mischen, und anschließend

- die Komponente H) und anschließend die Komponente F) oder
- eine Mischung aus den Komponenten F) und H) gemeinsam oder in beliebiger Reihenfolge, bevorzugt zuerst Komponente F) und anschließend die Komponente H) oder
- eine Mischung aus F) und H) gemeinsam oder in beliebiger Reihenfolge zugeben.

Beispielsweise kann man Komponente LCP-2) vorlegen und anschließend

- die Komponente F) und anschließend die Komponenten G), H), I) gemeinsam oder in beliebiger Reihenfolge, bevorzugt als gemeinsame Mischung, oder

- die Komponenten G), H) und I) gemeinsam oder in beliebiger Reihenfolge, bevorzugt als gemeinsame Mischung, und anschließend die Komponente F) zugeben.

Besonders bevorzugt wird LCP-2) vorgelegt und mit einer Mischung aus Komponente G) und H) gemeinsam oder in beliebiger Reihenfolge vermischt und anschließend mit Komponente F) und anschließend mit Komponente I) vermischt oder LCP-2) vorgelegt und mit einer Mischung aus Komponenten G), H) und I) gemeinsam oder in beliebiger Reihenfolge vermischt und anschließend mit Komponente G vermischt oder LCP-2) vorgelegt und mit Komponente F) vermischt und anschließend mit einer Mischung aus Komponenten G), H) und I) gemeinsam oder in beliebiger Reihenfolge vermischt.

Das Mischen der Komponenten A) bis E) mit der Komponente LCP-1) bzw. F) bis I) mit der Komponente LCP-2) kann nach den in der Holzwerkstoffindustrie bekannte Verfahren, wie sie beispielsweise in M. Dunky, P. Niemz, Holzwerkstoffe und Leime, Seite 118 bis 119 und Seite 145, Springer Verlag Heidelberg, 2002 beschrieben sind, erfolgen.

Das Mischen kann durch Aufsprühen der Komponenten oder Mischungen der Komponenten auf die Lignocellulosepartikel in Vorrichtungen wie schnell laufenden Ringmischern mit Leimzugabe über eine Hohlwelle (Innenbeleimung) oder schnell laufenden Ringmischern mit Leimzugabe von außen über Düsen (Außenbeleimung). Werden Lignocellulosefasern als Komponente LCP-1) bzw. LCP-2) eingesetzt, kann das Aufsprühen auch in der Blowline nach dem Refiner erfolgen.

Werden Lignocellulosestreifen (Strands) als Komponente LCP-1) bzw. LCP-2) eingesetzt, erfolgt das Aufsprühen in der Regel in großvolumigen, langsam laufenden Mischern.

Das Mischen kann auch durch Aufsprühen in einem Fallschacht erfolgen, wie es beispielsweise in DE-A-10 247 412 oder DE-A-10 104 047 beschrieben ist, oder durch Besprühen eines Vorhangs aus Lignocellulosepartikeln, wie es in der Evojet-Technologie der Dieffenbacher GmbH realisiert ist.

Verfahrensschritt (II) - Streuen der in Verfahrensschritt (I) hergestellten Mischung(en) zu einer Matte

Für den einschichtigen Lignocellulosewerkstoff wird die erhaltene Mischung LCP-1), A), B), C), D) und E) zu einer Matte gestreut.

Für den mehrschichtigen Lignocellulosewerkstoff werden die erhaltenen Mischungen der Komponenten LCP-1), A), B), C), D) und E) und die Mischungen der Komponenten LCP-2), F), G), H) und I) übereinander zu einer Matte gestreut, so dass sich der erfindungsgemäße Aufbau der mehrschichtigen Lignocellulosewerkstoffe [nach dem Muster (A), (B), (C)] ergibt. Dabei werden in der Regel die untere Deckschicht, bzw. die unteren Deckschichten, beginnend mit der äußersten Deckschicht bis der dem Kern nächstliegenden unteren Deckschicht, darauf die Kernschicht und anschließend die oberen Deckschichten, beginnend mit der dem Kern nächstliegenden oberen Deckschicht bis der äußersten Deckschicht gestreut. Bevorzugt werden eine untere Deckschicht, darauf die Kernschicht und anschließend eine obere Deckschicht gestreut. Die Kernschicht kann in einem oder mehreren Schritten gestreut werden, bevorzugt in zwei Schritten.

In der Regel wird so gestreut, dass pro Mattenfläche die Masse der für den Kern verwendeten Mischung M1 größer ist als die Masse der für die Deckschichten verwendeten Mischung(en) M2. Die Gesamtmasse an Mischung M1 und M2 pro Mattenfläche ergibt sich aufgrund der angestrebten Dicke und Dichte des Lignocellulosewerkstoffs.

Sollen die ein- oder mehrschichtigen Lignocelluloseschichten zusätzliche Schutzschichten enthalten, dann werden die für die Ausbildung dieser Schutzschichten nötigen Materialmischungen jeweils als unterste und oberste Schicht der Matte gestreut.

In der Regel streut man die Mischungen direkt auf eine Unterlage, z.B. auf ein Formband.

Die Streuung kann nach an sich bekannten Methoden wie Wurfsichtstreuung oder Windsichtstreuung, oder z.B. mit Rollensystemen (siehe beispielsweise M. Dunky, P. Niemz, Holzwerkstoffe und Leime, Seite 119 bis 121, Springer Verlag Heidelberg, 2002) diskontinuierlich oder kontinuierlich, bevorzugt kontinuierlich, durchgeführt werden.

Zwischen Verfahrensschritt (Ia) und Verfahrensschritt (II), also von der Fertigstellung der Mischung M1 bis zum Beginn der Streuung, kann ein Zeitraum von 3 bis 60 Minuten, bevorzugt 4 bis 45 Minuten, besonders bevorzugt 5 bis 25 Minuten liegen. In dieser Zeit wird die Mischung M1 beispielweise von einem Mischaggregat zu einer Streuvorrichtung transportiert. Die Mischung kann auch zwischengelagert werden, zum Beispiel in einem Streubunker. In einem kontinuierlichen Prozess sind die angegebenen Zeiten als mittlere Verweilzeiten zu verstehen. Die Temperatur der Mischung M1 kann sich innerhalb dieses Zeitraum ändern. In der Regel ist die Änderung der Temperatur kleiner als 10°C, bevorzugt kleiner als 5°C, besonders bevorzugt kleiner als 3°C.

Verfahrensschritt (III) - gegebenenfalls Vorverdichtung der gestreuten Matte

Nach dem Streuen jeder einzelnen Schicht kann eine Vorverdichtung stattfinden. Bei den mehrschichtigen Lignocellulosewerkstoffen kann in der Regel nach dem Streuen jeder einzelnen Schicht eine Vorverdichtung erfolgen, bevorzugt wird die Vorverdichtung nach dem Streuen aller Schichten übereinander durchgeführt.

Die Vorverdichtung kann nach dem Fachmann bekannten Verfahren erfolgen, wie sie beispielsweise in M. Dunky, P. Niemz, Holzwerkstoffe und Leime, Springer Verlag Heidelberg, 2002, Seite 819 oder in H.-J. Deppe, K. Ernst, MDF - Mitteldichte Faserplatte, DRW-Verlag, 1996, Seiten 44, 45 und 93 oder in A. Wagenführ, F. Scholz, Taschenbuch der Holztechnik, Fachbuchverlag Leipzig, 2012, Seite 219, beschrieben sind.

Während oder nach der Vorverdichtung und vor dem Verfahrensschritt (IV) kann in einem Vorerwärmungsschritt Energie mit einer oder mehreren beliebigen Energiequellen in die Matte eingebracht werden. Als Energiequellen eignen sich Heißluft, Wasserdampf, Dampf/Luft-Gemische oder elektrische Energie (Hochfrequentes Hochspannungsfeld oder Mikrowellen). Die Matte wird dabei im Kern auf 40 bis 130°C, bevorzugt auf 50 bis 100°C, besonders bevorzugt auf 55 bis 75°C erwärmt. Die Vorerwärmung mit Wasserdampf und Dampf/Luftgemischen bei mehrschichtigen Lignocellulosewerkstoffen kann auch so durchgeführt werden, dass nur die Deckschichten erwärmt werden, der Kern jedoch nicht. Bevorzugt werden auch bei mehrschichtigen Lignocellulosewerkstoffen der Kern und die Deckschichten erwärmt.

Erfolgt nach dem Vorverdichten eine Vorerwärmung, kann das Auffedern der Matte während der Erwärmung dadurch verhindert werden, dass die Erwärmung in einem nach oben und unten begrenzten Raum durchgeführt wird. Die Begrenzungsflächen sind dabei so ausgeführt, dass der Energieeintrag möglich ist. Beispielsweise können perforierte Kunststoffbänder oder Stahlnetze verwendet werden, die das Durchströmen von heißer Luft, Wasserdampf oder Wasserdampf-Luft-Gemischen ermöglichen. Gegebenenfalls sind die Begrenzungsflächen so ausgeführt, dass sie einen Druck auf die Matte ausüben, der so groß ist, dass das Auffedern während der Erwärmung verhindert wird.

In der Regel erfolgt nach dem Vorverdichten keine Vorerwärmung, das heißt, dass die gestreute Matte nach dem Verfahrensschritt (III) eine niedrigere Temperatur als oder die gleiche Temperatur wie vor dem Verfahrensschritt (III) aufweist.

Die Verdichtung kann in einem, zwei oder mehreren Schritten erfolgen.

Das erfindungsgemäße Verfahren kann auch ohne eine Vorverdichtung durchgeführt werden. Bevorzugt findet jedoch eine Vorverdichtung statt.

Die Vorverdichtung erfolgt in der Regel bei einem Druck von 1 bis 30 bar, bevorzugt 2 bis 25 bar, besonders bevorzugt 3 bis 20 bar.

Zwischen Anfang des Verfahrensschritts (II) und Anfang des Verfahrensschritts (III), also von Beginn der Streuung bis Beginn der Vorverdichtung, kann beispielsweise ein Zeitraum von 1 bis 120 Sekunden, bevorzugt 2 bis 60 Sekunden, besonders bevorzugt 3 bis 20 Sekunden liegen.

Verfahrensschritte (IV) - Heißpressen der gegebenenfalls vorverdichteten Matte

Im Verfahrensschritt (IV) wird die Dicke der Matte durch Anlegen eines Pressdrucks (weiter) verringert. Dabei wird die Temperatur der Matte durch Eintragen von Energie erhöht. Im einfachsten Fall wird ein konstanter Pressdruck angelegt und gleichzeitig durch eine Energiequelle konstanter Leistung erwärmt. Sowohl der Energieeintrag als auch die Verdichtung mittels Pressdruck kann aber auch zu jeweils unterschiedlichen Zeitpunkten und in mehreren Stufen erfolgen. Der Energieeintrag beim Verfahrensschritt (IV) erfolgt in der Regel

a) durch Anlegen eines hochfrequenten elektrischen Feldes und/oder
b) durch Heißpressen, also mittels Wärmeübergang von erwärmten Flächen, beispielsweise Pressblechen, auf die Matte während des Pressvorgangs,
bevorzugt b) durch Heißpressen.

a) Energieeintrag durch Anlegen eines hochfrequenten elektrischen Feldes

Beim Energieeintrag durch Anlegen eines hochfrequenten elektrischen Feldes wird die Matte so erwärmt, dass nach Abschalten des hochfrequenten elektrischen Feldes im Verfahrensschritt (IV) die Schicht des Kerns eine Temperatur von mehr als 90°C aufweist.

Wenn das hochfrequente elektrische Feld abgeschaltet wird, beträgt die Temperatur im Kern mindestens 90°C, also 90 bis 170°C, bevorzugt mindestens 100°C, also 100 bis 170°C, besonders bevorzugt mindestens 110°C, also 110 bis 170°C, insbesondere mindestens 120°C, also 120 bis 170°C.

Bei dem angelegten hochfrequenten elektrischen Feld kann es sich um Mikrowellenstrahlung oder um ein hochfrequentes elektrisches Feld handeln, das nach Anlegen einer hochfrequenten Wechselspannungsfeldes an einen Plattenkondensator zwischen den beiden Kondensatorplatten entsteht.

In einer bevorzugten Ausführungsform kann zunächst ein Verdichtungsschritt und danach das Erwärmen durch Anlegen eines hochfrequenten Wechselspannungsfeldes durchgeführt werden.

Hierzu kann die gestreute und verdichtete Matte mittels eines Förderbandes durch einen Bereich zwischen parallel angeordneten Plattenkondensatoren durchgeführt werden.

Eine Vorrichtung für einen kontinuierlichen Prozess, um die Erwärmung mittels Anlegen eines hochfrequenten elektrischen Feldes nach der Verdichtung innerhalb der gleichen Maschine zu realisieren, ist beispielsweise in WO-A-97/28936 beschrieben.

Die Erwärmung unmittelbar nach dem Verdichtungsschritt kann auch in einer diskontinuierlich arbeitenden Hochfrequenz-Presse erfolgen, z.B. in einer Hochfrequenz-Presse, beispielsweise in der Presse HLOP 170 der Firma Hoefer Presstechnik GmbH.

Erfolgt die Erwärmung nach dem Verdichten, kann das Auffedern der Matte während der Erwärmung dadurch zurückgedrängt, minimiert bzw. verhindert werden, dass die Erwärmung in einem nach oben und unten begrenzten Raum durchgeführt wird. Die Begrenzungsflächen sind dabei so ausgeführt, dass der Energieeintrag möglich ist. Gegebenenfalls sind die Begrenzungsflächen so ausgeführt, dass sie einen Druck auf die Matte ausüben, der so groß ist, dass das Auffedern während der Erwärmung verhindert wird.

In einer besonderen Ausführungsform für einen kontinuierlichen Prozess handelt es sich bei diesen Begrenzungsflächen um Pressbänder, die durch Rollen angetrieben werden. Hinter diesen Pressbändern sind die Platten der Kondensatoren angeordnet. Die Matte wird dabei durch ein Paar von Kondensatorplatten geleitet, wobei sich zwischen Matte und oberer Kondensatorplatte das eine Pressband, zwischen Matte und unterer Kondensatorplatte das andere Pressband befindet. Eine der beiden Kondensatorplatten kann geerdet sein, so dass die Hochfrequenz-Heizung nach dem Prinzip der unsymmetrischen Einspeisung arbeitet.

Bei den mehrschichtigen Lignocellulosewerkstoffen können die Deckschichten DS-A und DS-C nach Verfahrensschritt (IV) eine andere Temperatur als der Kern-B aufweisen. In der Regel beträgt die Temperaturdifferenz zwischen 0 und 50°C.

b) Energieeintrag durch Heißpressen

Der Energieeintrag durch Heißpressen erfolgt üblicherweise durch Kontakt mit beheizten Pressflächen, die Temperaturen von 80 bis 300°C, bevorzugt 120 bis 280°C, besonders bevorzugt 150 bis 250°C aufweisen, wobei während des Energieeintrags bei einem Druck von 1 bis 50 bar, bevorzugt 3 bis 40 bar, besonders bevorzugt 5 bis 30 bar gepresst wird. Das Pressen kann nach allen dem Fachmann bekannten Verfahren erfolgen (siehe Beispiele in "Taschenbuch der Spanplatten Technik" H.-J. Deppe, K. Ernst, 4. Aufl., 2000, DRW - Verlag Weinbrenner, Leinfelden Echterdingen, Seite 232 bis 254, und "MDF- Mitteldichte Faserplatten" H.-J. Deppe, K. Ernst, 1996, DRW- Verlag Weinbrenner, Leinfelden-Echterdingen, Seite 93 bis 104). Bevorzugt werden kontinuierliche Pressverfahren, beispielsweise mit Doppelbandpressen, verwendet. Die Pressdauer beträgt normalerweise 2 bis 15 Sekunden pro mm Plattendicke, bevorzugt 2 bis 10 Sekunden, besonders bevorzugt 2 bis 6 Sekunden, insbesondere 2 bis 4 Sekunden.

Erfolgt der Energieeintrag im Verfahrensschritt (IV) durch a) Anlegen eines hochfrequenten elektrischen Feldes und durch b) Heißpressen, dann wird bevorzugt zunächst Schritt a) und danach Schritt b) ausgeführt.

Zwischen Anfang des Verfahrensschritts (II) und Anfang des Verfahrensschritts (IV), also von Beginn der Streuung bis Beginn des Heißpressens, kann beispielsweise ein Zeitraum von 5 bis 300 Sekunden, bevorzugt 7 bis 120 Sekunden, besonders bevorzugt 10 bis 60 Sekunden liegen.

Die Komponenten des Kerns LCP-1), A), B), C), D), E) und die Komponenten der Deckschichten LCP-2), F), G-1), G-2), H), I) haben folgende Bedeutungen.

Komponente LCP-1) und LCP-2):

Als Rohstoff für die Lignocellulosepartikel LCP-1) und LCP-2) eignet sich jede beliebige Holzart oder deren Mischungen, beispielsweise Fichten-, Buchen-, Kiefern-, Lärchen-, Linden-, Pappeln-, Eukalyptus-, Eschen-, Kastanien-, Tannenholz oder deren Mischungen, bevorzugt Fichten-, Buchenholz oder deren Mischungen, insbesondere Fichtenholz, und können beispielsweise Holzteile wie Holzlagen, Holzstreifen (Strands), Holzspäne, Holzfasern, Holzstaub oder deren Mischungen, bevorzugt Holzspäne, Holzfasern, Holzstaub und deren Mischungen, besonders bevorzugt Holzspäne, Holzfasern oder deren Mischungen - wie sie für die Herstellung von Spanplatten, MDF (Mitteldichte Faserplatten) und HDF (Hochdichte Faserplatten) eingesetzt werden - sein, ganz besonders bevorzugt Holzspäne. Die Lignocellulosepartikel können auch von holzhaltigen Pflanzen wie Flachs, Hanf, Getreide oder anderen Einjahrespflanzen stammen, bevorzugt von Flachs oder Hanf. Besonders bevorzugt werden Holzspäne eingesetzt, wie sie bei der Herstellung von Spanplatten verwendet werden.

Ausgangsmaterialien für die Lignocellulosepartikel sind üblicherweise Rundhölzer, Durchforstungshölzer, Resthölzer, Waldholzabfälle, Industrieresthölzer, Gebrauchthölzer, Produktionsabfälle aus der Holzwerkstoffproduktion, gebrauchte Holzwerkstoffe sowie lignocellulosehaltige Pflanzen. Die Aufbereitung zu den gewünschten lignocellulosehaltigen Partikeln, beispielsweise zu Holzpartikeln wie Holzspäne oder Holzfasern, kann nach an sich bekannten Verfahren erfolgen (z.B. M. Dunky, P. Niemz, Holzwerkstoffe und Leime, Seite 91 bis 156, Springer Verlag Heidelberg, 2002).

Die Größe der Lignocellulosepartikel kann in weiten Grenzen variiert werden und in weiten Grenzen schwanken.

Wenn es sich bei den Lignocellulosepartikeln LCP-1) und LCP-2) um Lignocellulosefasern handelt, dann ist die volumengewichtete mittlere Faserlänge der Komponente LCP-2) der Deckschichten bevorzugt kleiner oder gleich, besonders bevorzugt kleiner als die der volumengewichteten mittleren Faserlänge der Komponente LCP-1) im Kern der mehrschichtigen Lignocellulosewerkstoffe. Das Verhältnis der volumengewichteten mittleren Faserlängen ($\overline{x}_{Strecke}$) der Komponente LCP-2) zur volumengewichteten mittleren Faserlängen ($\overline{x}_{Strecke}$) der Komponente LCP-1) kann in weiten Grenzen variiert werden und liegt in der Regel bei 0,1:1 bis 1:1, bevorzugt 0,5:1 bis 1:1, besonders bevorzugt 0,8:1 bis 1:1.

Die volumengewichtete mittlere Faserlänge ($\overline{x}_{Strecke}$) der Komponente LCP-1) beträgt in der Regel 0,1 bis 20 mm, bevorzugt 0,2 bis 10 mm, besonders bevorzugt 0,3 bis 8 mm, ganz besonders bevorzugt 0,4 bis 6 mm.

Die volumengewichtete mittlere Faserlänge $\overline{x}_{Strecke}$ wird mittels digitaler Bildanalyse bestimmt. Beispielsweise kann ein Gerät der Reihe Camsizer® der Firma Retsch Technology verwendet werden. Dabei wird von jeder einzelnen Faser einer representativen Probe $\overline{x}_{Strecke}$ bestimmt. $\overline{x}_{Strecke}$ wird berechnet aus der Fläche der Partikelprojektion A und dem Martin-Durchmesser $X_{Ma\_min}$. Dabei gilt $\overline{x}_{Strecke} = X_{Ma\_min}/A$. Aus den Einzelwerten wird der volumengewichtete Mittelwert $\overline{x}_{Strecke}$ gebildet. Die Messmethode und die Auswertung sind im Camsizer Handbuch beschrieben (Bedienungsanleitung/Handbuch Korngrößenmesssystem CAMSIZER®, Retsch Technology GmbH, Version 0445.506, Release 002, Revision 009 vom 25.06.2010).

Wenn es sich bei den Lignocellulosepartikeln LCP-1) und LCP-2) um Lignocellulosestreifen (Strands) oder Lignocellulosespäne handelt, dann ist der volumengewichtete mittlere Partikeldurchmesser der Komponente LCP-2) der Deckschichten bevorzugt kleiner oder gleich, besonders bevorzugt kleiner als die dem volumengewichteten mittleren Partikeldurchmesser der Komponente LCP-1) im Kern der mehrschichtigen Lignocellulosewerkstoffe. Das Verhältnis des volumengewichtete mittlere Partikeldurchmesser $\overline{x}_{Fe\,max}$ der Komponente LCP-2) zum volumengewichteten mittleren Partikeldurchmesser $\overline{x}_{Fe\,max}$ der Komponente LCP-1) kann in weiten Grenzen variiert werden und liegt in der Regel bei 0,01:1 bis 1:1, bevorzugt 0,1:1 bis 0,95:1, besonders bevorzugt 0,5:1 bis 0,9:1.

Der volumengewichtete mittlere Partikeldurchmesser $\overline{x}_{Fe\,max}$ der Komponente LCP-1) beträgt in der Regel 0,5 bis 100 mm, bevorzugt 1 bis 50 mm, besonders bevorzugt 2 bis 30 mm, ganz besonders bevorzugt 3 bis 20 mm.

Der volumengewichtete mittlere Partikeldurchmesser $\overline{x}_{Fe\,max}$ wird mittels digitaler Bildanalyse bestimmt. Beispielsweise kann ein Gerät der Reihe Camsizer® der Firma Retsch Technology verwendet werden. Dabei wird von jedem einzelnen Lignocellulosestreifen (Strand) oder jedem einzelnen Lignocellulosespan einer representativen Probe $\overline{x}_{Fe\,max}$ bestimmt. $\overline{x}_{Fe\,max}$ ist der größte Feret-Durchmesse eines Partikels (ermittelt aus verschiedenen Messrichtungen). Aus den Einzelwerten wird der volumengewichtete Mittelwert $\overline{x}_{Fe\,max}$ gebildet. Die Messmethode und die Auswertung sind im Camsizer Handbuch beschrieben (Bedienungsanleitung/Handbuch Korngrößenmesssystem CAMSIZER®, Retsch Technology GmbH, Version 0445.506, Release 002, Revision 009 vom 25.06.2010).

Setzt man Mischungen aus Holzspänen und anderen Lignocellulosepartikeln ein, z.B. Mischungen aus Holzspänen und Holzfasern, oder aus Holzspänen und Holzstaub, so beträgt der Anteil an Holzspänen der Komponente LCP-1) bzw. der Komponente LCP-2) in der Regel mindestens 50 Gew.-%, also 50 bis 100 Gew.-%, bevorzugt mindestens 75 Gew.-%, also 75 bis 100 Gew.-%, besonders bevorzugt mindestens 90 Gew.-%, also 90 bis 100 Gew.-%.

Die mittlere Dichten der Komponenten LCP-1) und LCP-2) liegen unabhängig voneinander in der Regel bei 0,4 bis 0,85 g/cm$^3$, bevorzugt bei 0,4 bis 0,75 g/cm$^3$, insbesondere bei 0,4 bis 0,6 g/cm$^3$. Diese Angaben beziehen sich auf die Normal-Rohdichte nach Lagerung im Normalklima (20°C, 65% Luftfeuchtigkeit).

Die Komponenten LCP-1) und LCP-2) können unabhängig voneinander die üblichen geringen Mengen Wasser von 0 bis 10 Gew.-%, bevorzugt 0,5 bis 8 Gew.-%, besonders bevorzugt 1 bis 5 Gew.-% (in einer üblichen geringen Schwankungsbreite von 0 bis 0,5 Gew.-%, bevorzugt 0 bis 0,4 Gew.-%, besonders bevorzugt 0 bis 0,3 Gew.-%) enthalten. Diese Mengenangabe bezieht sich auf 100 Gew.-% absolut trockene Holzsubstanz und beschreibt den Wassergehalt der Komponente LCP-1) bzw. LCP-2) nach dem Trocknen (nach üblichen dem Fachmann bekannten Methoden) vor dem Aufbringen der Komponente A) bis E) bzw. F) bis I) Mischen mit anderen Komponenten.

In einer weiteren bevorzugten Ausführungsform werden für die Deckschichten Lignocellulosefasern als Lignocellulosepartikel LCP-2) und für den Kern Lignocellulosestreifen (Strands) oder Lignocellulosespäne, besonders bevorzugt Lignocellulosespäne, insbesondere Lignocellulosespäne mit einem volumengewichteteten mittleren Partikeldurchmesser $\overline{x}_{Fe\,max}$ von 2 bis 30 mm als Lignocellulosepartikel LCP-1) verwendet.

Die Komponenten LCP-1) kann auch 0 bis 20 Gew.-%, bevorzugt 0 bis 10 Gew.-%, besonders bevorzugt 0 bis 5 Gew.-%, ganz besonders bevorzugt 0 Gew.-% leichte Füllstoffe enthalten, zum Beispiel Korkgranulat, Popcorn oder expandierte Kunststoffteilchen.

Die Gew.-%-Angaben bedeuten in diesem Fall den Anteil an leichtem Füllstoff (Trockengewicht) an dem Gesamt-Trockengewicht der Komponente LCP-1). 10 Gew.-% leichter Füllstoff bedeutet demnach, dass die Komponente LCP-1) bezogen auf die Trockengewichte 10 Gew.-% leichten Füllstoff und 90 Gew.-% Lignocellulosepartikel (wie oben beschrieben) enthalten. Die Bezugsgröße für die Angabe der Gew.-% der anderen Komponenten A) bis E) bleibt 100 Gew.-%.

Unter Popcorn werden hierbei werden dabei aus unterschiedlichen Pflanzensamen, z.B. Getreidekörnern, durch schlagartige Verdampfung des darin enthaltenden Wassers hergestellte schaumartige Materialien verstanden. Typische Ausgangsmaterialien hierfür sind Amarant-, Quinoa-, Reis-, Weizen- und Mais-Körner.

Als expandierte Kunststoffteilchen der Komponente eignen sich expandierte Kunststoffteilchen, bevorzugt expandierte thermoplastische Kunststoffteilchen mit einer Schüttdichte von 10 bis 150 kg/m$^3$, bevorzugt 30 bis 130 kg/m$^3$, besonders bevorzugt 35 bis 110 kg/m$^3$, insbesondere 40 bis 100 kg/m$^3$ (ermittelt durch Wiegen eines mit dem Schüttgut gefüllten definierten Volumens).

Expandierte Kunststoffteilchen der Komponente B) werden in der Regel in Form von Kugeln oder Perlen mit einem mittleren Durchmesser von 0,01 bis 50 mm, bevorzugt 0,25 bis 10 mm, besonders bevorzugt 0,4 bis 8,5 mm, insbesondere 0,4 bis 7 mm eingesetzt. In einer bevorzugten Ausführungsform weisen die Kugeln eine kleine Oberfläche pro Volumen auf, beispielsweise in Form eines sphärischen oder elliptischen Partikels und sind vorteilhaft geschlossenzellig. Die Offenzelligkeit nach DIN-ISO 4590 beträgt in der Regel nicht mehr als 30%, also 0 bis 30%, bevorzugt 1 bis 25%, besonders bevorzugt 5 bis 15%.

Geeignete Polymere, die den expandierten Kunststoffteilchen zugrunde liegen, sind in der Regel alle bekannten Polymere oder deren Gemische, vorzugsweise thermoplastische Polymere oder deren Gemische, die sich verschäumen lassen. Gut geeignete derartige Polymere sind beispielsweise Polyketone, Polysulfone, Polyoxymethylen, PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere (im Folgenden auch als "Polystyrol" oder "Styrolpolymerisat" bezeichnet), Styrolcopolymere, $C_2$- bis $C_{10}$-Olefinhomopolymere, $C_2$- bis $C_{10}$-Olefincopolymere und Polyester. Bevorzugt verwendet man zur Herstellung der genannten Olefinpolymere die 1-Alkene, zum Beispiel Ethylen, Propylen, 1-Buten, 1-Hexen, 1-Octen.

Des Weiteren können den Polymeren, vorzugsweise den Thermoplasten, die den expandierbaren oder expandierten Kunststoffteilchen der Komponente B) zugrunde liegen übliche Additive, zum Beispiel UV-Stabilisatoren, Antioxidantien, Beschichtungsmittel, Hydrophobierungsmittel, Keimbildner, Weichmacher, Flammschutzmittel, lösliche und unlösliche anorganische und/oder organische Farbstoffe zugesetzt sein.

Geeignete Polymere können mit einem ausdehnungsfähiges Medium (auch "Treibmittel" genannt) oder enthaltend ein ausdehnungsfähiges Medium durch Einwirkung von Mikrowellen-, Wärmenergie, Heißluft, vorzugsweise Dampf, und/oder Druckänderung expandiert (oft auch als "aufgeschäumt" bezeichnet) (Kunststoff Handbuch 1996, Band 4 "Polystyrol", Hanser 1996, Seiten 640 bis 673 oder US-A-5 112 875) werden. Hierbei dehnt sich in der Regel das Treibmittel aus, die Partikel nehmen an Größe zu und Zellstrukturen entstehen. Dieses Expandieren kann in üblichen Aufschäumvorrichtungen, oft als "Vorschäumer" bezeichnet, durchgeführt werden. Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert. In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert.

Zum Expandieren der expandierbaren Kunststoffteilchen können alle dem Fachmann bekannten Treibmittel verwendet werden, beispielsweise aliphatische $C_3$- bis $C_{10}$-Kohlenwasserstoffe, wie Propan, n-Butan, Isobutan, n-Pentan, Isopentan, Neopentan cyclo-Pentan und/oder Hexan und dessen Isomere, Alkohole, Ketone, Ester, Ether oder halogenierte Kohlenwasserstoffe, bevorzugt n-Pentan, Isopentan, Neopentan und Cyclopentan, besonders bevorzugt ein handelsübliches Pentanisomerengemisch aus n-Pentan und Isopentan.

In einer bevorzugten Ausführungsform verwendet man Styrolhomopolymerisat (hierin auch einfach "Polystyrol" genannt), Styrolcopolymerisat oder deren Mischungen.

Üblicherweise weist das expandierbare Polystyrol oder expandierbare Styrolcopolymerisat oder das expandierte Polystyrol oder expandierte Styrolcopolymerisat eine antistatische Beschichtung auf.

Dem Polymer, aus dem die expandierten Kunststoffteilchen hergestellt werden, können vor oder während des Aufschäumens Pigmente und Partikel, wie Ruß, Graphit oder Aluminiumpulver, als Zusatzstoffe zugegeben werden.

Komponente C) und G-1):
Die Gesamtmenge der Bindemittel der Komponente C), bezogen auf das Trockengewicht der Komponente LCP-1 liegt im Bereich von 5 bis 15 Gew.-%, vorzugsweise 6 bis 13 Gew.-%, besonders bevorzugt 7 bis 11 Gew.-%.

Die Gesamtmenge des Bindemittels der Komponente G-1), bezogen auf das Trockengewicht der Komponente LCP-2 liegt im Bereich von 1 bis 30 Gew.-%, vorzugsweise 2 bis 20 Gew.-%, besonders bevorzugt 3 bis 15 Gew.-%.

Die Bindemittel der Komponente C) werden ausgewählt aus der Gruppe der Aminoplastharze.

Die Bindemittel der Komponente G-1) können ausgewählt werden aus der Gruppe bestehend aus Aminoplastharz, Phenoplastharz, Protein-basiertem Bindemittel und anderem Polymerbasiertem Bindemittel.

Als Komponenten G-1) können gleiche oder unterschiedliche Bindemittel bzw. Bindemittelmischungen der Komponenten G-1), bevorzugt gleiche, besonders bevorzugt in beiden Fällen Aminoplastharz, verwendet werden.

Die Gewichtsprozentangabe bezieht sich bei Aminoplastharzen, Phenoplastharzen, Proteinbasierten Bindemitteln und den anderen Polymer-basierten Bindemitteln auf den Feststoffgehalt der entsprechenden Komponente (bestimmt durch Verdunsten des Wassers bei 120°C, innerhalb von 2h nach Günter Zeppenfeld, Dirk Grunwald, Klebstoffe in der Holz- und Möbelindustrie, 2. Auflage, DRW-Verlag, Seite 268).

Phenoplastharz

Phenoplaste sind synthetische Harze, die durch Kondensation von Phenolen mit Aldehyden erhalten werden und gegebenenfalls modifiziert werden können. Neben unsubstituiertem Phenol können auch Phenolderivate für die Herstellung von Phenoplasten eingesetzt werden. Diese Derivate können Kresole, Xylenole oder andere Alkylphenole, zum Beispiel p-tert.-Butylphenol, p-tert.-Octylphenol und p-tert.-Nonylphenol, Arylphenole, zum Beispiel Phenylphenol und Naphthole, oder divalente Phenole, zum Beispiel Resorcinol und Bisphenol A, sein. Der wichtigste Aldehyd für die Herstellung von Phenoplasten ist Formaldehyd, der in unterschiedlicher Form eingesetzt werden kann, zum Beispiel als wässrige Lösung, oder in fester Form als Paraformaldehyd, oder als Formaldehyd-freisetzende Substanz. Andere Aldehyde, zum Beispiel Acetaldehyd, Acrolein, Benzaldehyd oder Furfural und Ketone können auch verwendet werden. Phenoplaste können durch chemische Reaktionen der Methylolgruppen oder der phenolischen Hydroxylgruppen und/oder durch physikalische Dispersion in einem Modifizierungsmittel modifiziert werden (EN ISO 10082).

Bevorzugte Phenoplaste sind Phenolaldehydharze, besonders bevorzug Phenolformaldehydharze (auch "PF-Harze" genannt) sind z.B. aus Kunststoff-Handbuch, 2. Auflage, Hanser 1988, Band 10 "Duroplaste", Seiten 12 bis 40 bekannt.

Aminoplastharz

Als Aminoplastharz können alle dem Fachmann, vorzugsweise die für die Herstellung von Holzwerkstoffen bekannten, Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben. Es sind in der Regel Polykondensationsprodukte aus Verbindungen mit mindestens einer, gegebenenfalls teilweise mit organischen Resten substituierten, Aminogruppe oder Carbamidgruppe (die Carbamidgruppe wird auch Carboxamidgruppe genannt), bevorzugt Carbamidgruppe, bevorzugt Harnstoff oder Melamin, und einem Aldehyd, vorzugsweise Formaldehyd. Bevorzugte Polykondensationsprodukte sind Harnstoff-Formaldehydharze (UF-Harze), Melamin-Formaldehydharze (MF-Harze) oder melaminhaltige Harnstoff-Formaldehydharze (MUF-Harze), besonders bevorzugte Harnstoff-Formaldehydharze, beispielsweise Kaurit® Leim-Typen der Firma BASF SE.

Besonders bevorzugt sind Harnstoff-Formaldehydharze (UF-Harze) und melaminhaltige Harnstoff-Formaldehydharze (MUF-Harze), bei denen das molare Verhältnis Formaldehyd zu $NH_2$-Gruppe (aus Harnstoff und Melamin) im Bereich von 0,3:1 bis 1:1, bevorzugt 0,3:1 bis 0,6:1, besonders bevorzugt 0,3:1 bis 0,55:1, ganz besonders bevorzugt 0,3:1 bis 0,5:1 liegt. Die genannten Aminoplastharze werden üblicherweise in flüssiger Form, üblicherweise als 25 bis 90 gew.-%ige, vorzugsweise als 50 bis 70 gew.-%ige Lösung, vorzugsweise in wässriger Lösung bzw. Suspension eingesetzt, Die pH-Werte dieser wässrigen Aminoplastharze liegen in der Regel zwischen 6,5 und 9,5, bevorzugt zwischen 7,0 und 9,0, besonders bevorzugt zwischen 7,2 und 8,8.

Der Feststoffgehalt des flüssigen wässrigen Aminoplast-Harzes kann nach Günter Zeppenfeld, Dirk Grunwald, Klebstoffe in der Holz- und Möbelindustrie, 2. Auflage, DRW-Verlag, Seite 268 bestimmt werden.

Protein-basierte Bindemittel

Geeignete Protein-basierte Bindemittel sind beispielsweise Kasein-, Glutin- und Blutalbuminleime. Außerdem können Bindemittel eingesetzt werden, bei denen alkalisch hydrolysierte Proteine als Bindemittelbestandteil eingesetzt werden. Solche Bindemittel sind bei M. Dunky, P. Niemz, Holzwerkstoffe und Leime, Springer 2002, Seiten 415 bis 417, beschrieben.

Besonders geeignet sind Soja-Protein basierte Bindemittel. Typischerweise werden diese Bindemittel aus Sojamehl hergestellt. Das Sojamehl kann gegebenenfalls modifiziert werden. Das Soja-basierte Bindemittel kann als Dispersion vorliegen. Es enthält verschiedenen funktionellen Gruppen, wie Lysin, Histidin, Arginin, Tyrosin, Tryptophan, Serin und/oder Cystein. In einer besonderen Ausführungsform wird das Soja-Protein copolymerisiert, z. B. mit Phenolharz, Harnstoffharz oder PMDI. In einer ganz besonderen Ausführungsform besteht das Soja-basierte Bindemittel aus einer Kombination eines Polyamidoepichlorhydrin-Harzes (PAE) mit einem Soja-basierten Bindemittel. Ein geeignetes Bindemittel ist zum Beispiel das kommerziell erhältliche Bindemittelsystem Hercules® PTV D-41080 Resin (PAE-Harz) und PTV D-40999 (Soja-Komponente).

Andere Polymer-basierte Bindemittel

Geeignete Polymer-basierte Bindemittel sind wässrige Bindemittel, die ein Polymer N enthalten, welches aus folgenden Monomeren aufgebaut ist:

a) 70 bis 100 Gew.-% wenigstens einer ethylenisch ungesättigten Mono und/oder Dicarbonsäure (Monomer(e) $N_1$) und

b) 0 bis 30 Gew.-% wenigstens eines weiteren ethylenisch ungesättigten Monomeren, welches sich von den Monomeren $N_1$ unterscheidet (Monomer(e) $N_2$)

und gegebenenfalls einen niedermolekularen Vernetzer mit mindestens zwei funktionellen Gruppen, welche ausgewählt sind aus der Gruppe Hydroxy, Carbonsäure und deren Derivate, primäre, sekundäres und tertiäres Amin, Epoxy und Aldehyd.

Die Herstellung von Polymeren N ist dem Fachmann geläufig und erfolgt insbesondere durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Als Monomere $N_1$ kommen insbesondere 3 bis 6 C-Atome aufweisende $\alpha,\beta$-mono-ethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure und/oder Maleinsäureanhydrid, wobei Acrylsäure und die Zweier-Kombinationen aus Acrylsäure und Maleinsäureanhydrid oder Acrylsäure und Maleinsäure insbesondere bevorzugt sind.

Als Monomer(e) $N_2$ kommen in einfacher Weise mit Monomer(en) $N_1$ radikalisch copolymerisierbare ethylenisch ungesättigte Verbindungen in Betracht, beispielsweise Ethylen, $C_3$- bis $C_{24}$-$\alpha$-Olefine, wie Propen, 1-Hexen, 1-Octen, 1-Decen; vinylaromatische Monomere, wie Styrol, $\alpha$-Methylstyrol, o-Chlorstyrol oder Vinyltoluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester; Nitrile $\alpha,\beta$-monoethylenisch ungesättigter Carbonsäuren, wie Acrylnitril, Methacrylnitril, Fumarsäuredinitril, Maleinsäuredinitril sowie $C_4$- bis $C_8$-konjugierte Diene, wie 1,3-Butadien und Isopren. Die genannten Monomere bilden in der Regel die Hauptmonomeren, die, bezogen auf die Gesamtmenge an Monomeren $N_2$, einen Anteil von > 50 Gew.-%, bevorzugt > 80 Gew.-% und insbesondere bevorzugt > 90 Gew.-% auf sich vereinen oder sogar die Gesamtmenge der Monomeren $N_2$ bilden. In aller Regel weisen diese Monomeren in Wasser bei Normalbedingungen (20°C, 1 atm (absolut)) lediglich eine mäßige bis geringe Löslichkeit auf.

Weitere Monomere $N_2$, die allerdings unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid; ferner Vinylsulfonsäure, 2-Acrylamido-2-methylpropan-sulfonsäure, Styrolsulfonsäure und deren wasserlösliche Salze sowie N-Vinylpyrroli-don; 2-Vinylpyridin, 4-Vinylpyridin; 2-Vinylimidazol; 2-(N,N-Dimethyl-amino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Üblicherweise sind die vorgenannten wasserlöslichen Monomeren $N_2$ lediglich als modifizierende Monomere in Mengen von < 10 Gew.-%, bevorzugt < 5 Gew.-% und insbesondere bevorzugt < 3 Gew.-%, bezogen auf die Gesamtmenge an Monomeren $N_2$, enthalten.

Weitere Monomere $N_2$, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldi-acrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldi-methacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-Ci- bis $C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. - methacrylat.

Häufig werden die vorgenannten vernetzenden Monomeren $N_2$ in Mengen von < 10 zu Gew.-%, bevorzugt jedoch in Mengen von < 5 Gew.-%, jeweils bezogen auf die Gesamtmenge an Monomeren $N_2$, eingesetzt. Insbesondere bevorzugt werden jedoch keinerlei derartige vernetzende Monomeren $N_2$ zu Herstellung des Polymers N eingesetzt.

Bevorzugte Polymere N sind erhältlich durch radikalisch initiierte Lösungspolymerisation lediglich von Monomeren $N_1$, besonders bevorzugt von 65 bis 100 Gew.-%, ganz besonders bevorzugt von 70 bis 90 Gew.-% Acrylsäure mit besonders bevorzugt 0 bis 35 Gew.-%, ganz besonders bevorzugt 10 bis 30 Gew.-% Maleinsäure oder Maleinsäureanhydrid.

Vorteilhaft weist Polymer N ein gewichtsmittleres Molekulargewicht $M_w$ im Bereich von 1.000 bis 500.000 g/mol, bevorzugt 10.000 bis 300.000 g/mol, besonders bevorzugt 30.000 bis 120.000 g/mol auf.

Die Einstellung des gewichtsmittleren Molekulargewichts $M_w$ bei der Herstellung von Polymer N ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts $M_w$ ist dem Fachmann geläufig und erfolgt beispielsweise mittels Gelpermeationschromatograpie.

Gut geeignete Handelsprodukte für Polymere N sind zum Beispiel die Sokalan®-Produkte der BASF SE, welche beispielsweise auf Acrylsäure und/oder Maleinsäure basieren. Weitere geeignete Polymere sind in WO-A-99/02591 beschrieben.

Gut geeignete Vernetzer sind solche mit einem (gewichtsmittleren) Molekulargewicht im Bereich von 30 bis 10.000 g/mol. Beispielhaft seien genannt: Alkanolamine, wie Triethanolamin; Carbonsäuren, wie Zitronensäure, Weinsäure, Butantetracarbonsäure; Alkohole, wie Glucose, Saccharose oder andere Zucker, Glycerin, Glycol, Sorbitol, Trimethylolpropan; Epoxide, wie Bisphenol-A oder Bisphenol-F sowie darauf basierende Harze und weiterhin Polyalkylenoxid-Glycidylether oder Trimethylolpropan-Triglycidylether. In einer bevorzugten Ausführungsform der Erfindung liegt das Molekulargewicht des verwendeten niedermolekularen Vernetzers im Bereich von 30 bis 4.000 g/mol, besonders bevorzugt im Bereich von 30 bis 500 g/mol.

Andere geeignete Polymer-basierte Bindemittel sind wässrige Dispersionen, die ein oder mehrere Polymer(e) enthalten, welche aus folgenden Monomeren aufgebaut sind:

a. 0 bis 50 Gew.-% wenigstens eines ethylenisch ungesättigten Monomeren, welches wenigstens eine Epoxid- und/oder wenigstens eine Hydroxyalkylgruppe enthält (Monomer(e) $M_1$), und
b. 50 bis 100 Gew.-% wenigstens eines weiteren ethylenisch ungesättigten Monomeren, welches sich von den Monomeren $M_1$ unterscheidet (Monomer(e) $M_2$).

Polymer M ist durch radikalisch initiierte Emulsionspolymerisation in einem wässrigen Medium der entsprechenden Monomeren $M_1$ und/oder $M_2$ erhältlich. Polymer M kann einphasig oder mehrphasig vorliegen. Polymer M kann einen Kern/Schale-Aufbau haben.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt (siehe z.B.: Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A-40 03 422 und Dispersionen synthetischer Hochpolymerer, F. Hölscher, Springer-Verlag, Berlin (1969)).

Die radikalisch initiierte wässrige Emulsionspolymerisationsreaktionen erfolgen üblicherweise so, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert.

Als Monomer(e) $M_1$ kommen insbesondere Glycidylacrylat und/oder Glycidylmethacrylat sowie Hydroxyalkyl-acrylate und -methacrylate mit $C_2$- bis $C_{10}$-Hydroxyalkyl-gruppen, insbesondere $C_2$- bis $C_4$-Hydroxyalkylgruppen und bevorzugt $C_2$- und $C_3$-Hydroxyalkylgruppen in Betracht, zum Beispiel 2-Hydroxyethylacrylat, 2-Hydroxyethyl-methacrylat, 3-Hydroxypropylacrylat, 3-Hydroxypropylmethacrylat, 4-Hydroxybutyl-acrylat und/oder 4-Hydroxybutylmethacrylat. Mit besonderem Vorteil werden eines oder mehrere, vorzugsweise eines oder zwei, der folgenden Monomere M1 eingesetzt: 2 Hydroxyethylacrylat, 2-Hydroxyethylmethacrylat, Glycidylacrylat, Glycidylmethacrylat.

Erfindungsgemäß ist es möglich, gegebenenfalls eine Teil- oder die Gesamtmenge an Monomeren $M_1$ im

Polymerisationsgefäß vorzulegen. Es ist aber auch möglich, die Gesamtmenge oder die gegebenenfalls verbliebene Restmenge an Monomeren $M_1$ während der Polymerisationsreaktion zuzudosieren. Die Gesamtmenge oder die gegebenenfalls verbliebene Restmenge an Monomeren $M_1$ kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren $M_1$ während der Polymerisationsreaktion kontinuierlich mit gleichbleibenden Mengenströmen, insbesondere als Bestandteil einer wässrigen Monomerenemulsion.

Als Monomer(e) $M_2$ kommen insbesondere in einfacher Weise mit Monomer(en) $M_1$ radikalisch copolymerisierbare ethylenisch ungesättigte Verbindungen in Betracht, beispielsweise Ethylen; vinylaromatische Monomere, wie Styrol, $\alpha$-Methylstyrol, o-Chlor-styrol oder Vinyltoluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester; Nitrile $\alpha,\beta$-monoethylenisch ungesättigter Carbonsäuren, wie Acrylnitril, Methacrylnitril, Fumarsäuredinitril, Maleinsäuredinitril sowie $C_4$- bis $C_8$-konjugierte Diene, wie 1,3-Butadien und Isopren. Die genannten Monomere bilden in der Regel die Hauptmonomeren, die, bezogen auf die Gesamtmenge an Monomeren $M_2$, einen Anteil von >50 Gew.-%, bevorzugt >80 Gew.-% und insbesondere >90 Gew.-% auf sich vereinen. In aller Regel weisen diese Monomeren in Wasser bei Normalbedingungen (20°C, 1 atm (absolut)) lediglich eine mäßige bis geringe Löslichkeit auf.

Monomere $M_2$, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende $\alpha,\beta$-monoethylenisch ungesättigte Mono- und Dicarbonsäuren und deren Amide, wie z. B. Acrylsäure, Methacrylsäure, Maleinsäure, Fumarsäure, Itaconsäure, Acrylamid und Methacrylamid; ferner Vinylsulfonsäure, 2-Acrylamido-2-methylpropansulfonsäure, Styrolsulfonsäure und deren wasserlösliche Salze sowie N-Vinylpyrrolidon, 2-Vinyl-pyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethyl-amino-propyl)methacrylamid, 2-(1-Imidazolin-2-onyl)ethylmethacrylat und Ureidomethacrylat. Im Normalfall sind die vorgenannten wasserlöslichen Monomeren $M_2$ lediglich als modifizierende Monomere in Mengen von <10 Gew.-%, bevorzugt <5 Gew.-% und insbesondere bevorzugt <3 Gew.-%, bezogen auf die Gesamtmenge an Monomeren $M_2$, enthalten.

Monomere $M_2$, die üblicherweise die innere Festigkeit der Verfilmungen einer Polymermatrix erhöhen, weisen normalerweise wenigstens eine N-Methylol- oder Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenlykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang auch von Bedeutung sind Verbindungen, wie Diacetonacrylamid und Acetylace-toxyethylacrylat bzw. -methacrylat. Häufig werden die vorgenannten vernetzenden Monomeren $M_2$ in Mengen von <10 zu Gew.-%, bevorzugt in Mengen von <5 Gew.-% und insbesondere bevorzugt in Mengen von <3 Gew.-%, jeweils bezogen auf die Gesamtmenge an Monomeren $M_2$, eingesetzt. Häufig werden jedoch keinerlei derartige vernetzende Monomeren $M_2$ verwendet.

Erfindungsgemäß ist es möglich, gegebenenfalls eine Teil- oder die Gesamtmenge an Monomeren $M_2$ im Polymerisationsgefäß vorzulegen. Es ist aber auch möglich, die Gesamtmenge oder die gegebenenfalls verbliebene Restmenge an Monomeren $M_2$ während der Polymerisationsreaktion zuzudosieren. Die Gesamtmenge oder die gegebenenfalls verbliebene Restmenge an Monomeren $M_2$ kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren $M_2$ während der Polymerisationsreaktion kontinuierlich mit gleichbleibenden Mengenströmen, insbesondere als Bestandteil einer wässrigen Monomerenemulsion.

Zur Herstellung der wässrigen Dispersion der Komponente (II) werden häufig Dispergierhilfsmittel mitverwendet, die sowohl die Monomerentröpfchen als auch die durch die radikalisch initiierte Polymerisation erhaltenen Polymerteilchen in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon- oder Acrylsäure-enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z. B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 3 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Bevorzugt werden für das erfindungsgemäße Verfahren nichtionische und/oder anionische Emulgatoren verwendet.

In der Regel beträgt die Menge an eingesetztem Dispergierhilfsmittel, insbesondere Emulgatoren, 0,1 bis 5 Gew.-%, bevorzugt 1 bis 3 Gew.-%, jeweils bezogen auf die Gesamtmenge des Monomerengemisches M. Für den Fall, dass Schutzkolloide als alleinige Dispergierhilfsmittel verwendet werden, liegt die eingesetzte Menge deutlich höher; man verwendet üblicherweise 5 bis 40 Gew.-% Dispergierhilfsmittel, bevorzugt 10 bis 30 Gew.-%, jeweils bezogen auf die Gesamtmenge des Monomerengemisches M.

Erfindungsgemäß ist es möglich, gegebenenfalls eine Teil- oder die Gesamtmenge an Dispergierhilfsmittel im Polymerisationsgefäß vorzulegen. Es ist aber auch möglich, die Gesamtmenge oder die gegebenenfalls verbliebene Restmenge an Dispergierhilfsmittel während der Polymerisationsreaktion zuzudosieren. Die Gesamtmenge oder die gegebenenfalls verbliebene Restmenge an Dispergierhilfsmittel kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Dispergierhilfsmittel während der Polymerisationsreaktion kontinuierlich mit gleichbleibenden Mengenströmen, insbesondere als Bestandteil einer wässrigen Monomerenemulsion.

Bevorzugte Polymere M enthalten a) 0,01 bis 50 Gew.-% wenigstens eines ethylenisch ungesättigten Monomeren, welches wenigstens eine Epoxid- und/oder wenigstens eine Hydroxyalkylgruppe enthält (Monomer(e) $M_1$) und b) 50 bis 99,99 Gew.-% wenigstens eines weiteren ethylenisch ungesättigten Monomeren, welches sich von den Monomeren $M_1$ unterscheidet (Monomer(e) $M_2$).

Besonders bevorzugte derartige Polymere M sind erhältlich durch radikalisch initiierte Lösungspolymersiation von 10 bis 30 Gew.-%, vorzugsweise 15 bis 22 Gew.-% Acrylsäure- und/oder Methacrylsäureestern mit $C_1$- bis $C_8$-Alkoholen - vorzugsweise Methanol, n-Butanol, 2-Ethylhexanol - mit 40 bis 70 Gew.-%, vorzugsweise 55 bis 65 Gew.-% Styrol und von 5 bis 50 Gew.-%, vorzugsweise 20 bis 30 Gew.-% 2-Hydroxyethyl-acrylat und/oder 2-Hydroxyethylmethacrylat und/oder Glycidylacrylat und/oder Glycidylmethacrylat, wobei die Summe der Komponenten 100 Gew.-% ergibt.

Weitere bevorzugte Polymere M enthalten kein(e) Monomer(e) $M_1$ und sind erhältlich durch radikalisch initiierte Lösungspolymersiation von 80 bis 99 Gew.-%, vorzugsweise 85 bis 95 Gew.-% Acrylsäureestern und/oder Methacrylsäureestern mit $C_1$- bis $C_8$-Alkoholen - vorzugsweise Methanol, n-Butanol, 2-Ethylhexanol - mit 0 bis 5 Gew.-%, vorzugsweise 1 bis 3 Gew.-% Ureidomethacrylat und von 0,5 bis 5 Gew.-%, vorzugsweise 1 bis 4 Gew.-% 3 bis 6 C-Atome aufweisende $\alpha,\beta$-monoethylenisch ungesättigte Mono- und Dicarbonsäuren - vorzugsweise Acrylsäure, Methacrylsäure - und/oder Amiden dieser Säuren, wobei die Summe der Komponenten 100 Gew.-% ergibt.

Weitere bevorzugte Polymere M sind erhältlich durch Verwendung von Dispergierhilfsmitteln auf Basis von Poly(acrylsäure)n, wie sie in EP-A-1240205 oder DE-A-19991049592 beschrieben sind.

Andere geeignete wässrige Dispersionen sind Dispersionen ausgewählt aus der Gruppe der Polyurethane, der halogenierten Vinylpolymere, der Vinylalkohol- und/oder Vinylesterpolymere, Kautschuk, Kolophoniumharze und Kohlenwasserstoffharze. Solche Dispersionen sind kommerziell erhältlich, beispielsweise Vinnepas® Ethylen-Vinylacetat-Dispersionen von Wacker, oder Tacylon-Kolophoniumharze von Eastman Chemical Company. Wässrige Dispersionen von aliphatischen und aromatischen Polyurethanen, Polyvinylacetat-homo- und -copolymeren, Terpentinharze und Kohlenwasserstoffharze sind bevorzugt.

Komponente B) und G-2):

Die Menge der Komponente B) bezogen auf Komponente LCP-1) liegt im Bereich von 0,05 bis 3 Gew.-%, vorzugsweise 0,1 bis 1 Gew.-%, besonders bevorzugt 0,15 bis 0,5 Gew.-%,.

Die Menge der Komponente G-2) bezogen auf Komponente LCP-2) liegt im Bereich von 0 bis 3 Gew.-%, vorzugsweise 0 bis 1 Gew.-%, besonders bevorzugt 0 bis 0,1 Gew.-%, ganz besonders bevorzugt 0 Gew.-%.

Die Komponenten B) und G-2) können werden ausgewählt aus der Gruppe der organischen Isocyanate mit mindestens zwei Isocyanatgruppen.

Als organische Isocyanate mit mindestens zwei Isocyanatgruppen eignen sich alle dem Fachmann, vorzugsweise die für die Herstellung von Holzwerkstoffen oder Polyurethanen bekannten, organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische. Die Isocyanate können entweder aliphatisch, cycloaliphatisch oder aromatisch sein. Besonders bevorzugt ist das organische Isocyanat MDI (Methylendiphenyldiisocyanat) oder das oligomere organische Isocyanat PMDI (Polymeres Methylendiphenylendiisocyanat) oder Mischungen aus MDI und PMDI. Diese organischen Isocyanate sind erhältlich durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18, letzter Absatz bis Seite 19, zweiter Absatz und Seite 76, fünfter Absatz). Ganz besonders bevorzugt sind Produkte der LUPRANAT®-Typenreihe, insbesondere LUPRANAT® M 20 FB der BASF SE.

Das organische Isocyanat kann auch ein Isocyanat-terminiertes Prepolymer sein, das das Reaktionsprodukt eines Isocyanats, z.B. PMDI, mit einem oder mehreren Polyolen und/oder Polyaminen ist.

Es können Polyole verwendet werden, die aus der Gruppe Ethylenglykol, Diethylenglykol, Propylenglykol, Dipropylenglykol, Butandiol, Glycerin, Trimethylolpropan, Triethanolamin, Pentaerythrit, Sorbitol und Mischungen daraus, ausgewählt sind. Andere geeignete Polyole sind Biopolyole, wie Polyole aus Sojaöl, Rapsöl, Rizinusöl und Sonnenblumenöl. Geeignet sind auch Polyetherpolyole, die durch Polymerisierung von cyclischen Oxiden, wie zum Beispiel Ethylenoxid, Propylenoxid, Butylenoxid oder Tetrahydrofuran in der Gegenwart polyfunktioneller Initiatoren erhalten werden können. Geeignete Initiatoren enthalten aktive Wasserstoffatome und können Wasser, Butandiol, Ethylenglykol, Propylenglykol, Diethylenglykol, Triethylenglykol, Dipropylenglykol, Ethanolamin, Diethanolamin, Triethanolamin, Toluoldiamin, Diethyltoluoldiamin, Phenyldiamin, Diphenylmethandiamin, Ethylendiamin, Cyclohexandiamin, Cylcohexandimethanol, Resorcinol, Bisphenol A, Glycerin, Trimethylolpropan, 1,2,6-Hexantriol, Pentaerythrit, oder Gemische davon sein. Andere geeignete Polyetherpolyole umfassen Diole und Triole, wie beispielsweise Polyoxypropylendiole und -triole und Poly(oxyethylen-oxypropylen)diole und - triole, die durch gleichzeitige oder nacheinander erfolgende Additionsreaktionen von Ethylen- und Propylenoxiden mit di- oder trifunktionellen Initiatoren hergestellt werden. Geeignet sind auch Polyesterpolyole wie hydroxyterminierte Reaktionsprodukte von Polyolen, wie sie oben bereits beschrieben wurden, mit Polycarbonsäuren oder Polycarbonsäurederivaten, z. B. deren Anhydride, insbesondere Dicarbonsäuren oder Dicarbonsäurederivaten, beispielsweise Bernsteinsäure, Bernsteinsäuredimethylester, Glutarsäure, Glutarsäuredimethylester, Adipinsäure, Adipinsäuredimethylester, Sebacinsäure, Phthalsäureanhydrid, Tetrachlorophthalsäureanhydrid oder Dimethylterephthalat, oder Mischungen daraus.

Es können Polyamine verwendet werden, die aus der Gruppe Ethylendiamin, Toluoldiamin, Diaminodiphenylmethan, Polymethylenpolyphenylpolyamine, Aminoalkohole und Mischungen daraus, ausgewählt sind. Beispiele für Aminoalkohole sind Ethanolamin und Diethanolamin.

Die organischen Isocyanate können auch als wässrige Emulsion eingesetzt werden. Bevorzugt werden wasserfreie organische Isocyanate verwendet.

Die Gewichtsprozentangabe bei den organischen Isocyanaten bezieht auf die Isocyanatkomponente an sich, also zum Beispiel ohne Wasser als Emulgiermedium.

Komponente A) und F):

Die Menge der Komponente A) bezogen auf die Komponente LCP-1) liegt in der Regel bei 0,005 bis 0,5 Gew.-%, bevorzugt bei 0,008 bis 0,2 Gew.-%, besonders bevorzugt bei 0,01 bis 0,1 Gew.-%.

Die Menge der Komponente F) bezogen auf die Komponente LCP-2) liegt in der Regel bei 0 bis 0,3 Gew.-%, bevorzugt bei 0 bis 0,1 Gew.-%, besonders bevorzugt bei 0 bis 0,05 Gew.-%, ganz besonders bevorzugt bei 0 Gew.-%.

Die Komponenten A) und F) sind jeweils unabhängig voneinander ausgewählt aus der Gruppe der organischen Carbonsäuren, Carbonsäureanhydride, Carbonsäurechloride oder deren Gemische, bevorzugt aus der Gruppe der organischen Carbonsäuren und Carbonsäureanhydriden und besonders bevorzugt aus der Gruppe der organischen Carbonsäureanhydriden.

Als organische Carbonsäure, Carbonsäureanhydride und Carbonsäurechloride eignen sich solche mit einem Molekulargewicht von weniger als 2.000 g/mol, bevorzugt weniger als 1.000 g/mol, besonders bevorzugt weniger als 500 g/mol.

Als organische Carbonsäurechloride eignen sich $C_2$- bis $C_{20}$-Carbonsäurechloride wie beispielsweise Essigsäurechlorid und Phthalsäurechlorid, bevorzugt $C_2$- bis $C_{15}$-Carbonsäurechloride, ganz besonders bevorzugt $C_2$- bis $C_8$-Carbonsäurechloride.

Als organische Carbonsäureanhydride eignen sich $C_2$- bis $C_{50}$-Carbonsäureanhydride wie Essigsäureanhydrid, Bersteinsäureanhydrid, Phthalsäureanhydrid, Glutarsäureanhydrid, Polymaleinsäureanhydrid, Perylentetracarbonsäureanhydrid, Itaconsäureanhydrid, Maleinsäureanhydrid (MSA), bevorzugt $C_4$- bis $C_{15}$-Carbonsäureanhydride wie Bernsteinsäureanhydrid, Phthalsäureanhydrid, Maleinsäureanhydrid (MSA), besonders bevorzugt $C_4$- bis $C_8$-Carbonsäureanhydride wie Bernsteinsäureanhydrid, Itaconsäureanhydrid und Maleinsäureanhydrid (MSA), ganz besonders bevorzugt Maleinsäureanhydrid (MSA).

Geeignete organische Carbonsäuren sind $C_1$- bis $C_{15}$-Carbonsäuren wie Ameisensäure, Essigsäure, Maleinsäure, Fumarsäure, Bernsteinsäure, Itaconsäure, Benzoesäure, Phthalsäure und Sebacinsäure. Bevorzugte organische Carbonsäuren sind Maleinsäure, Fumarsäure, Bernsteinsäure und Essigsäure.

In einer bevorzugten Ausführungsform wird eine Teilmenge oder die komplette Menge, bevorzugt die komplette Menge der Komponente A) mit der Komponente B) bzw. einer Teilmenge der Komponente B) zu einer Mischung AB) gemischt, bevor sie mit der Komponente LCP-1) in Kontakt gebracht wird.

In einer weiteren bevorzugten Ausführungsform wird eine Teilmenge oder die komplette Menge, bevorzugt die komplette Menge der Komponente A) mit der Komponente B) bzw. einer Teilmenge der Komponente B) und mit der Komponente E) bzw. einer Teilmenge der Komponente E) zu einer Mischung ABE) gemischt, bevor sie mit der Komponente LCP-1) in Kontakt gebracht wird.

In einer weiteren bevorzugten Ausführungsform verwendet man für die Mischung AB) bzw. ABE) als Komponente A) bevorzugt Carbonsäuren oder Carbonsäureanhydride, besonders bevorzugt Carbonsäureanhydride. Verwendet man Carbonsäuren dann beträgt der Zeitraum zwischen dem Mischen und dem Zugeben der Mischung AB) bzw. ABE) zu den Lignocellulosepartikeln LCP-1) in der Regel weniger als 5 Minuten, bevorzugt weniger als 1 Minute, besonders bevorzugt weniger als 10 Sekunden.

Die Mischungen AB) bzw. ABE) enthalten bevorzugt:

i) 50 bis 99 Gew.-%, bevorzugt 70 bis 97 Gew.-%, besonders bevorzugt 80 bis 95 Gew.-%, insbesondere 85 bis 92 Gew.-% Komponente A) und

ii) 1 bis 50 Gew.-%, bevorzugt 3 bis 30 Gew.-%, besonders bevorzugt 5 bis 20 Gew.-%, insbesondere 8 bis 15 Gew.-% Komponente B) und

iii) 0 bis 49 Gew.-%, bevorzugt 0 bis 10 Gew.-%, besonders bevorzugt 0 bis 5 Gew.-% Komponente E)

wobei die Komponente E) hierbei bevorzugt ausgewählt wird aus der Gruppe der inerten Verdünnungsmittel, der Tenside und der Trialkylphosphate.

Ganz besonders bevorzugt wird die Mischung AB) bzw. ABE) als eine im Wesentlichen wasserfreie Mischung eingesetzt. Unter einer im Wesentlichen wasserfreien Mischung wird hier eine Mischung verstanden, die 0 bis 1 Gew.-%, bevorzugt 0 bis 0,1 Gew.-%, besonders bevorzugt 0 bis 0,01 Gew.-%, ganz besonders bevorzugt 0 bis 0,001 Gew.-% Wasser, insbesondere 0 Gew.-% Wasser enthält.

In weiteren ganz besonders bevorzugten Ausführungsformen liegt die Mischung AB) bzw. ABE) als Lösung vor.

Die Mischung AB) bzw. ABE) kann gegebenenfalls kurz vor dem Zugeben zu den Lignocellulosepartikeln LCP-1), wenn das Zugeben zu den Lignocellulosepartikeln getrennt von der Komponente C) erfolgt, bzw. vor dem Zugeben zu der Komponente C), wenn das Zugeben zu den Lignocellulosepartikeln als Mischung erfolgt, durch Mischen der Bestandteile hergestellt werden. Der Zeitraum zwischen Herstellung und Zugeben beträgt hierbei 3 Stunden oder weniger. Der Zeitraum kann auch sehr kurz sein und nur wenige Minuten, beispielsweise 5 min und weniger betragen. Dabei kann das Mischen so erfolgen, dass die Bestandteile aus separaten Behältern einem Mischaggregat, z.B. Mischbehälter oder statischem Mischer, zugeführt und darin gemischt werden.

In einer besonders bevorzugten Ausführungsform kann der Gewichtsanteil der Komponente A) in der verwendeten Mischung AB) bzw. ABE) eingestellt werden, indem man mehrere, bevorzugt zwei Mischungen AB) und oder ABE), die sich in ihren Gewichtsanteilen an Komponente A) unterscheiden, miteinander mischt. Diese Ausführungsform ist insbesondere in einem kontinuierlichen Verfahren vorteilhaft, da man über Änderung des Mischungsverhältnisses der Mischungen die Größe a [Menge an Säureäquivalenten der Komponente A) im Verhältnis zur Masse an Komponente C)] einfach und schnell anpassen kann, wenn sich die Temperatur T im Prozess ändert.

In einer weiteren besonders bevorzugten Ausführungsform kann der Gewichtsanteil der Komponente A) in der verwendeten Mischung AB) bzw. ABE) eingestellt werden, indem man eine Mischung AB) bzw. ABE) mit einer Teilmenge der Komponente B) mischt. Diese Ausführungsform ist ebenso insbesondere in einem kontinuierlichen Verfahren vorteilhaft, da man auch hierbei über Änderungen des Mischungsverhältnisses die Größe a einfach und schnell anpassen kann, wenn sich die Temperatur T im Prozess ändert.

Komponente D) und H):

Als Komponente D) und H) werden Ammoniumsalze eingesetzt. Diese zeigen eine latente Härtung von Aminoplastharzen zeigen (M. Dunky, P. Niemz, Holzwerkstoffe und Leime, Springer 2002, Seiten 265 bis 269), und werden daher auch als latente Härter bezeichnet. Latent bedeutet hier, dass die Härtungsreaktion nicht unmittelbar nach dem Vermischen des Aminoplastharzes und des Härters eintritt sondern erst verzögert, bzw. nach Aktivierung des Härters durch z.B. Temperatur. Die verzögerte Härtung erhöht die Verarbeitungszeit eines Aminoplastharz-Härter-Gemisches. Auch für die Mischung der Lignocellulosepartikel mit Aminoplastharz, Härter und den anderen Komponenten kann sich der Einsatz von latenten Härter vorteilhaft auswirken, weil es zu einer geringeren Voraushärtung des Aminoplastharzes vor Verfahrensschritt iv) kommen kann. Bevorzugte latente Härter sind Ammoniumchlorid, Ammoniumbromid, Ammoniumiodid, Ammoniumsulfat, Ammoniumsulfit, Ammoniummethansulfonat, Ammoniumphosphat, Ammoniumnitrat, oder deren Gemische, bevorzugt Ammoniumsulfat, Ammoniumnitrat, Ammoniumchlorid oder deren Gemische, besonders bevorzugt Ammoniumsulfat, Ammoniumnitrat oder deren Gemische.

Zusätzlich zu den Ammoniumsalzen können die Komponenten D) und H) auch geringe Mengen an anorganischen Säuren oder sauren Salze von anorganischen Säuren enthalten, zum Beispiel Schwefelsäure, Salpetersäure, Aluminiumchlorid, Aluminiumsulfat. Kommt eine solche Mischung zum Einsatz, dann ist das Massenverhältnis anorganische Säure und/oder saures Salz von anorganischen Säuren kleiner als 10 : 90, bevorzugt kleiner als 5 : 95, wobei die absolute Menge anorganischer Säure und/oder saures Salz von anorganischen Säuren höchstens 0,1 Gew.-% bezogen auf das Trockengewicht der Komponente LCP-1) bzw. LCP-2), bevorzugt höchsten 0,02 Gew.-% beträgt.

In einer besonders bevorzugten Ausführungsform wird nur mit Ammoniumsalzen und ohne anorganische Säuren und ohne Salze von anorganischen Säuren gearbeitet.

Die Menge der Komponente D) bezogen auf das Gesamttrockengewicht an Komponente LCP-1) liegt im Bereich von 0 bis 2 Gew.-%, besonders bevorzugt 0,05 bis 1,0 Gew-%, ganz besonders bevorzugt 0,1 bis 0,5 Gew.-%.

Die Menge der Komponente H) bezogen auf das Gesamttrockengewicht an Komponente LCP-2) liegt im Bereich von 0 bis 2 Gew.-%, besonders bevorzugt 0 bis 0,5 Gew-%, ganz besonders bevorzugt 0 bis 0,2 Gew.-%.

Enthält die Komponente G-1) kein Aminoplastharz, ist die Menge der Komponente H) bevorzugt 0 Gew.-%.

Komponente E) und I):

Die Komponenten E) und I) können ausgewählt werden aus der Gruppe der Tenside und/oder der Trialkylphosphate und/oder der Gruppe weiterer dem Fachmann bekannten Additive, z.B. Hydrophobierungsmittel wie Paraffin-Emulsionen, Pilzschutzmittel, Formaldehydfänger, zum Beispiel Harnstoff oder Polyamine, Flammschutzmittel, Lösungsmittel wie beispielsweise Alkohole, Glykole, Glycerin, Metalle, Kohlenstoff, Pigmente, Farbstoffe, Alkali- oder Erdalkalisalze aus der Gruppe der Sulfate, Nitrate, Phosphate, Halogenide, oder Härter für Phenolharze (sofern die Komponente G-1) Phenolharz enthält) oder deren Gemische. Es können unabhängig voneinander gleiche oder verschiedene, Additive in Mengen von 0 bis 5 Gew.-%, bevorzugt 0,5 bis 4 Gew.-%, besonders bevorzugt 1 bis 3 Gew.-% bezogen auf den Gesamttrockengehalt der Lignocellulosepartikel LCP-1) bzw. LCP-2) eingesetzt werden.

Geeignete Tenside sind anionische, kationische, nicht-ionische, oder amphotere Tenside, und deren Gemische. Besonders bevorzugt sind nicht-ionische, oder amphotere Tenside und deren Gemische, besonders bevorzugt nicht-ionische Tenside.

Beispiele von Tensiden sind aufgeführt in McCutcheon's, Vol.1: Emulsifiers & Detergents, McCutcheon's Directories, Glen Rock, USA, 2008 (International Ed. or North American Ed.).

Geeignete anionische Tenside sind Alkali-, Erdalkali- oder Ammoniumsalze von Sulfonaten, Sulfaten, Phosphaten, Carboxylaten oder deren Gemische. Beispiele für Sulfonate sind Alkylarylsulfonate, Diphenylsulfonate, $\alpha$-Olefinsulfonate, Ligninsulfonate, Sulfonate von Fettsäuren und Ölen, Sulfonate von ethoxylierten Alkylphenolen, Sulfonate von alkoxylierten Arylphenolen, Naphthalinsulfonat-Kondensate, Dodecyl- und Tridecylbenzolsulfonate, Naphthalin- und Sikylnaphthalinsulfonate oder Sulfosuccinate. Beispiele für Sulfate sind Sulfate von Fettsäuren und Ölen, ethoxylierte Alkylphenolsulfate, Alkoholsulfate, Sulfate von ethoxylierten Alkoholen oder Festsäureestersulfate.

Geeignete nichtionische Tenside sind Alkoxylate, N-substituierte Fettsäureamide, Aminoxide, Ester, Zuckerbasierte Tenside, polymere Tenside, Blockpolymere und deren Gemische. Beispiele für Alkoxylate sind Verbindungen wie Alkohole, Alkylphenole, Amine, Amide, Arylphenole, Fettsäuren oder Fettsäureester, die mit 1 bis 50 Äquivalenten Alkylenoxid alkoxyliert wurden. Für die Alkoxylierung können Ethylenoxid und/oder Propylenoxid verwendet werden, bevorzugt Ethylenoxid. Beispiele für N-substituierte Fettsäureamide sind Fettsäureglucamide oder Fettsäurealkanolamide. Bespiele für Ester sind Fettsäureester, Glycerinester oder Monoglyceride. Beispiele für Zucker-basierte Tenside sind Sorbitan, ethoxylierte Sorbitane, Saccharose- und Glycoseester oder Alkylpolyglucoside. Beispiele für polymere Tenside sind Homo- oder Copolymer von Vinylpyrrolidon, Vinylalkohol, oder Vinylacetat. Geeignete Blockpolymere sind Blockpolymere des Typs A-B oder A-B-A, die Blöcke aus Polyethylenoxid und Polypropylenoxid enthalten, oder des Typs A-B-C, die Alkanol und Blöcke aus Polyethylenoxid und Polypropylenoxid enthalten. Bevorzugt sind Fettalkoholpolyglykolether.

Geeignete kationische Tenside sind quaternäre Tenside, zum Beispiel quartäre Ammoniumverbindungen mit einer oder zwei hydrophoben Gruppen oder Ammoniumsalze von langkettigen primären Aminen.

Geeignete amphotere Tenside sind Alkylbetaine und Imidazoline.

Besonders bevorzugte Tenside sind Fettalkoholpolyglykolether, Fettalkoholsulfate, sulfonierte Fettalkoholpolyglykolether, Fettalkoholethersulfate, sulfonierte Fettsäuremethylester, Zuckertenside, wie Alkylglykoside, Alkylbenzolsulfonate, Alkansulfonate, Methylestersulfonate, quartäre Ammoniumsalze, wie beispielsweise Cetyltrimethylammoniumbromid und Seifen.

Geeignete Trialkylphosphate sind Verbindungen der Struktur $R_3PO_4$, wobei jeder der drei (3) Reste R unabhängig voneinander eine Alkylgruppe mit 1, 2, 3, 4, 5 oder 6 Kohlenstoffatomen sein kann. Jede Gruppe R kann die gleiche oder eine unterschiedliche, bevorzugt die gleiche Anzahl an Kohlenstoffatomen aufweisen. Bei gleicher Anzahl von Kohlenstoffatomen kann es sich entweder um die gleichen Gruppen oder um isomere Gruppen, bevorzugt gleiche Gruppen, handeln.

Beispielsweise können Trimethylphosphat, Triethylphosphat, Triproplyphosphat, Tributylphosphat, Tripentylphosphat, Trihexylphosphat oder deren Gemische, bevorzugt Trimethylphosphat, Triethylphosphat, Tripropylphosphat oder deren Gemische, besonders bevorzugt Triethylphosphat verwendet werden.

Als Härter für Phenoplastharze können beispielsweise Carbonate oder Hydroxide wie Kaliumcarbonat oder Natriumhydroxid eingesetzt werden. Weiterhin geeignet ist Hexamethylentetramin. Weitere Beispiele von Härtern für Phenoplastharze sind aus M. Dunky, P. Niemz, Holzwerkstoffe und Leime, Springer 2002, Seiten 341 bis 352 bekannt.

Weitere geeignete Additive können beispielsweise inerte Verdünnungsmittel für die Isocyanatkomponenten sein (Komponenten B) und G-2)). Als inerte Verdünnungsmittel eignen sich inerte Flüssigkeiten, z.B. aromatische Verbindungen wie Toluol, Benzol, Xylole, Naphthaline, Chlorbenzol, organische Lösungsmittel wie Aceton, Ether, Ethylacetat, THF, Kohlensäureester (wie beispielsweise Dimethylcarbonat, Diethylcarbonat, Diphenylcarbonat, Propylencarbonat, Ethylencarbonat), Alkane und Alkene (wie beispielsweise Penten, Hexan, Cyclohexan, Heptan), Paraffinöl, Wachse, Silikonöle, bevorzugt Kohlensäureester, Paraffinöl oder Silikonöl, besonders bevorzugt Kohlensäureester oder Paraffinöl.

Verwendung:

Mit dem erfindungsgemäßen Verfahren lassen sich ein- und mehrschichtige Lignocellulosewerkstoffe unterschiedlicher Art herstellen, besonders bevorzugt sind ein- und mehrschichtige Span- und Faserplatten und Oriented Strand Boards (OSB), ganz besonders bevorzugt einschichtige Span- und Faserplatten und mehrschichtige Spanplatte, insbesondere mehrschichtige Spanplatten.

Die Gesamtdicke der erfindungsgemäßen mehrschichtigen Lignocellulosewerkstoffe variiert mit dem Anwendungsgebiet und liegt in der Regel im Bereich von 0,5 bis 100 mm, vorzugsweise im Bereich von 10 bis 40 mm, insbesondere 15 bis 20 mm.

Die erfindungsgemäßen ein- und mehrschichtigen Lignocellulosewerkstoffe haben in der Regel eine mittlere Gesamtdichte von 100 bis 1000 kg/m$^3$, bevorzugt 400 bis 850 kg/m$^3$.

Die erfindungsgemäßen mehrschichtigen Spanplatten haben in der Regel eine mittlere Gesamtdichte von 400 bis 750 kg/m$^3$, besonders bevorzugt 425 bis 650 kg/m$^3$, insbesondere 450 bis 600 kg/m$^3$. Die Dichte wird 24 h Stunden nach Herstellung gemäß EN 1058 bestimmt.

Die nach dem erfindungsgemäßen Verfahren hergestellten Lignocellulosewerkstoffe, insbesondere ein- und mehrschichtige Spanplatten und einschichtige Faserplatten, werden vor allem im Bau, im Innenausbau, im Laden- und Messebau, als Material für Möbel und als Verpackungsmaterial verwendet.

In einer bevorzugten Verwendung werden die nach dem erfindungsgemäßen Verfahren hergestellten Lignocellulosewerkstoffe werden als Innenlagen für Sandwichplatten eingesetzt. Dabei können die Außenlagen der Sandwichplatten aus unterschiedlichen Werkstoffen bestehen, beispielsweise aus Metall wie Aluminium oder Edelstahl, oder aus dünnen Holzwerkstoffplatten, wie Spanplatten oder Faserplatten, bevorzugt hochverdichtete Faserplatten (HDF), oder aus Laminaten wie zum Beispiel High Pressure Laminate (HPL).

In einer weiteren bevorzugten Verwendung werden die nach dem erfindungsgemäßen Verfahren hergestellten Lignocellulosewerkstoffe auf einer oder mehreren Seiten beschichtet, z.B., mit Möbelfolien, mit Melaminfilmen, mit Furnieren, mit Kunststoffkante oder mit Lack.

Im Bau, Innenausbau und Laden- und Messebau werden die nach dem erfindungsgemäß hergestellten Lignocellulosewerkstoffe oder die daraus hergestellten beschichteten Lignocellulosewerkstoffe oder die daraus hergestellten Sandwichplatten beispielsweise als Dach- und Wandbeplankungen, Ausfachungen, Verschalungen, Fußböden, Türeninnenlagen, Trennwände oder Regalböden verwendet.

Im Möbelbau werden die nach dem erfindungsgemäßen Verfahren hergestellten Lignocellulosewerkstoffe oder die daraus hergestellten beschichteten Lignocellulosewerkstoffe oder die aus diesen Lignocellulosewerkstoffen hergestellten Sandwichplatten beispielsweise als Trägermaterial für Kastenmöbel, als Regalboden, als Türenmaterial, als Arbeitsplatte, als Küchenfront, als Elemente in Tischen, Stühlen und Polstermöbel eingesetzt.

**Patentansprüche**

1. Verfahren zur diskontinuierlichen oder kontinuierlichen Herstellung von ein- oder mehrschichtigen Lignocellulosewerkstoffen enthaltend die Verfahrensschritte

> (Ia) Herstellung einer Mischung M1 und
> (Ib) gegebenenfalls einer oder mehrerer Mischung(en) M2,
> (II) Streuen der Mischung M1 und gegebenenfalls der Mischung(en) M2 zu einer Matte,
> (III) gegebenenfalls Vorverdichtung der gestreuten Matte und
> (IV) Heißpressen,
> **dadurch gekennzeichnet, dass** die Mischung M1 die Lignocellulosepartikel (Komponente LCP-1) und zusätzlich

>> a) 0,005 bis 0,5 Gew.-% organische Carbonsäure, Carbonsäureanhydrid, Carbonsäurechlorid oder deren Gemische (Komponente A)
>> b) 0,05 bis 3 Gew.-% organische Isocyanate mit mindestens zwei Isocyanatgruppen (Komponente B) und
>> c) 5 bis 15 Gew.-% Bindemittel, ausgewählt aus der Gruppe der Aminoplastharze (Komponente C)
>> d) 0 bis 2 Gew.-% Härter (Komponente D) und
>> e) 0 bis 5 Gew.-% Additiv (Komponente E),
>> und die Mischung(en) M2 die Lignocellulosepartikel (Komponente LCP-2) und zusätzlich
>> f) 0 bis 0,3 Gew.-% organische Carbonsäure, Carbonsäureanhydrid, Carbonsäurechlorid oder deren Gemische (Komponente F),
>> g) 1 bis 30 Gew.-% Bindemittel ausgewählt aus der Gruppe bestehend aus Aminoplastharz, Phenoplastharz, Protein-basiertem Bindemittel und anderem Polymer-basierten Bindemittel oder deren Gemische (Komponente G-1) und 0 bis 3 Gew.-% organisches Isocyanat mit mindestens zwei Isocyanatgruppen (Komponente G-2),
>> h) 0 bis 2 Gew.-% Härter (Komponente H) und
>> i) 0 bis 5 Gew.-% Additiven (Komponente I)

> enthält, mit der Maßgabe, dass die folgenden Bedingungen erfüllt sind:

$$a_{min} < a < a_{max}$$

> und

> $a_{min} = [(- 1/6000 \cdot T) + (65/6000)]$, bevorzugt $a_{min} = [(- 1/4500 \cdot T) + (65/4500)]$, besonders bevorzugt $a_{min} = [(- 1/3500 \cdot T] + (65/3500)]$

>> und

> $a_{max} = [(- 1/2000 \cdot T) + (75/2000)]$, bevorzugt $a_{max} = [(- 1/2500 \cdot T) + (75/2500)]$, besonders bevorzugt $a_{max} = [(- 1/3000 \cdot T) + (75/3000)]$,

>> wobei

>> T die Temperatur der Mischung M1 in °C nach dem Verfahrensschritt (Ia) ist und diese zwischen 10 und 65°C, bevorzugt 10 und 60°C, besonders bevorzugt 15 bis 58°C liegt und
>> a die Menge an Säureäquivalenten der Komponente A) im Verhältnis zur Masse an Komponente C) in mol/100 g ist.

**2.** Verfahren zur diskontinuierlichen oder kontinuierlichen Herstellung von ein- oder mehrschichtigen Lignocellulosewerkstoffen nach Anspruch 1, **dadurch gekennzeichnet, dass** man im Verfahrensschritt (la) die Komponente A) bzw. die Mischung aus Komponente A) und Komponente B) bzw. die Mischung aus Komponente A), Komponente B) und Komponente E) und

- die Komponente C) bzw.
- eine Mischung der Komponente C) mit einer oder mehreren Komponenten ausgewählt aus der Gruppe der Komponenten B), D) oder E)

(1) getrennt voneinander oder
(2) als Mischung innerhalb von 0,1 bis 3600 Sekunden nach Herstellung der Mischung auf die Lignocellulosepartikel (Komponente LCP-1) aufbringt.

**3.** Verfahren zur diskontinuierlichen oder kontinuierlichen Herstellung von ein- oder mehrschichtigen Lignocellulosewerkstoffen nach Anspruch 1 oder 2, **dadurch gekennzeichnet, dass** man die Komponente A) teilweise oder vollständig mit der Komponente B) oder einer Teilmenge der Komponente B) mischt, bevor man sie mit den Lignocellulosepartikeln (Komponente LCP-1) in Kontakt bringt.

**4.** Verfahren zur diskontinuierlichen oder kontinuierlichen Herstellung von ein- oder mehrschichtigen Lignocellulosewerkstoffen nach einem der Ansprüche 1 bis 3, **dadurch gekennzeichnet, dass** man die Komponente A) vollständig mit der Komponente B) oder einer Teilmenge der Komponente B) mischt, bevor man sie mit den Lignocellulosepartikeln (Komponente LCP-1) in Kontakt bringt.

**5.** Verfahren zur diskontinuierlichen oder kontinuierlichen Herstellung von ein- oder mehrschichtigen Lignocellulosewerkstoffen nach einem der Ansprüche 1 bis 4, **dadurch gekennzeichnet, dass** man eine Teilmenge oder die komplette Menge, bevorzugt die komplette Menge der Komponente A) mit der Komponente B) bzw. einer Teilmenge der Komponente B) und mit der Komponente E) bzw. einer Teilmenge der Komponente E) zu einer Mischung ABE) mischt, bevor man sie mit der Komponente LCP-1) in Kontakt bringt.

**6.** Verfahren zur diskontinuierlichen oder kontinuierlichen Herstellung von ein- oder mehrschichtigen Lignocellulosewerkstoffen nach einem der Ansprüche 1 bis 5, **dadurch gekennzeichnet, dass** man die Komponente C), die gegebenenfalls in einem separaten Schritt mit einer oder mehreren Komponenten ausgewählt aus den Gruppen der Komponenten B), D) und E) gemischt wird, und die Komponente A) bzw. die Mischung der Komponente A) mit Komponente B) bzw. die Mischung der Komponente A) mit Komponente B) und Komponente E) getrennt voneinander oder als Mischung innerhalb von 0,1 bis 3600 Sekunden zu den Lignocellulosepartikeln LCP-1) bzw. zu der Mischung aus Lignocellulosepartikeln LCP-1) mit einer oder mehreren Komponenten ausgewählt aus den Gruppen der Komponenten B), D) und E) gibt.

**7.** Verfahren zur diskontinuierlichen oder kontinuierlichen Herstellung von ein- oder mehrschichtigen Lignocellulosewerkstoffen nach einem der Ansprüche 1 bis 6, **dadurch gekennzeichnet, dass** man die Komponente LCP-1) vorlegt, mit der Komponente C) und Komponente D) gemeinsam oder in beliebiger Reihenfolge mischt, und anschließend die Komponenten E) und anschließend die Komponente A) und B), gemeinsam oder in beliebiger Reihenfolge, bevorzugt gemeinsam, oder die Komponente A) und B), gemeinsam oder in beliebiger Reihenfolge, bevorzugt gemeinsam, und anschließend die Komponente E) zugibt.

**8.** Verfahren zur diskontinuierlichen oder kontinuierlichen Herstellung von ein- oder mehrschichtigen Lignocellulosewerkstoffen nach einem der Ansprüche 1 bis 7, **dadurch gekennzeichnet, dass** man die Komponente LCP-1) vorlegt, mit der Komponente A) und Komponente B) gemeinsam oder in beliebiger Reihenfolge mischt, bevorzugt gemeinsam, und anschließend die Komponenten E) und anschließend die Komponente C) und D), gemeinsam oder in beliebiger Reihenfolge, bevorzugt gemeinsam, oder die Komponente C) und D), gemeinsam oder in beliebiger Reihenfolge, bevorzugt gemeinsam, und anschließend die Komponente E) zugibt.

**9.** Verfahren zur diskontinuierlichen oder kontinuierlichen Herstellung von ein- oder mehrschichtigen Lignocellulosewerkstoffen nach einem der Ansprüche 1 bis 8, **dadurch gekennzeichnet, dass** man die Komponente LCP-1) vorlegt, mit der Komponente E) mischt, und anschließend Komponente C) und Komponente D) gemeinsam oder in beliebiger Reihenfolge, bevorzugt gemeinsam, und anschließend die Komponente A) und B), gemeinsam oder in beliebiger Reihenfolge, bevorzugt gemeinsam, oder die Komponente A) und B), gemeinsam oder in beliebiger Reihenfolge, bevorzugt gemeinsam, und anschließend Komponente C) und Komponente D) gemeinsam oder in beliebiger Reihenfolge zugibt.

10. Verfahren zur diskontinuierlichen oder kontinuierlichen Herstellung von ein- oder mehrschichtigen Lignocellulosewerkstoffen nach einem der Ansprüche 1 bis 9, **dadurch gekennzeichnet, dass** man die Komponente LCP-1) vorlegt, mit der Komponente E) mischt, und anschließend eine Mischung der Komponenten A), B), C) und D) zugibt.

11. Verfahren zur diskontinuierlichen oder kontinuierlichen Herstellung von ein- oder mehrschichtigen Lignocellulosewerkstoffen nach einem der Ansprüche 1 bis 10, **dadurch gekennzeichnet, dass** man die Komponente LCP-1) vorlegt, mit einer Mischung der Komponenten A), B), C) und D) mischt, und anschließend die Komponente E) zugibt.

12. Verfahren zur diskontinuierlichen oder kontinuierlichen Herstellung von ein- oder mehrschichtigen Lignocellulosewerkstoffen nach einem der Ansprüche 1 bis 11, **dadurch gekennzeichnet, dass** man die Komponente LCP-1) vorlegt, mit einer Teilmenge der Komponente E) mischt, und anschließend eine Mischung einer weiteren Teilmenge der Komponente E) und der Komponenten A), B), C) und D) zugibt.

13. Verfahren zur diskontinuierlichen oder kontinuierlichen Herstellung von ein- oder mehrschichtigen Lignocellulosewerkstoffen nach einem der Ansprüche 1 bis 12, **dadurch gekennzeichnet, dass** man die Komponente LCP-1) vorlegt, mit einer Mischung einer Teilmenge der Komponente E) und der Komponenten A), B), C) und D) mischt, und anschließend eine weitere Teilmenge der Komponente E) zugibt.

14. Verfahren zur diskontinuierlichen oder kontinuierlichen Herstellung von ein- oder mehrschichtigen Lignocellulosewerkstoffen nach einem der Ansprüche 1 bis 13, **dadurch gekennzeichnet, dass** man als Komponente A) Carbonsäureanhydride, bevorzugt C4- bis C8-Carbonsäureanhydride wie Bernsteinsäureanhydrid, Itaconsäureanhydrid und Maleinsäureanhydrid (MSA), besonders bevorzugt Maleinsäureanhydrid (MSA) einsetzt.

15. Verfahren zur diskontinuierlichen oder kontinuierlichen Herstellung von ein- oder mehrschichtigen Lignocellulosewerkstoffen nach einem der Ansprüche 1 bis 14, **dadurch gekennzeichnet, dass** man als Komponente F) $C_4$- bis $C_8$-Carbonsäureanhydride wie Bernsteinsäureanhydrid, Itaconsäureanhydrid und Maleinsäureanhydrid (MSA), besonders bevorzugt Maleinsäureanhydrid (MSA) einsetzt.

16. Verfahren zur diskontinuierlichen oder kontinuierlichen Herstellung von ein- oder mehrschichtigen Lignocellulosewerkstoffen nach einem der Ansprüche 1 bis 15, **dadurch gekennzeichnet, dass** man eine Teilmenge oder die komplette Menge, bevorzugt die komplette Menge der Komponente A) mit der Komponente B) bzw. einer Teilmenge der Komponente B) und mit der Komponente E) bzw. einer Teilmenge der Komponente E) zu einer Mischung ABE) mischt, bevor sie mit der Komponente LCP-1) in Kontakt bringt.

17. Verfahren zur diskontinuierlichen oder kontinuierlichen Herstellung von ein- oder mehrschichtigen Lignocellulosewerkstoffen nach einem der Ansprüche 1 bis 16, **dadurch gekennzeichnet, dass** die Mischungen AB) bzw. ABE) 50 bis 99 Gew.-%, bevorzugt 70 bis 97 Gew.-%, besonders bevorzugt 80 bis 95 Gew.-%, insbesondere 85 bis 92 Gew.-% Komponente A) und 1 bis 50 Gew.-%, bevorzugt 3 bis 30 Gew.-%, besonders bevorzugt 5 bis 20 Gew.-%, insbesondere 8 bis 15 Gew.-% Komponente B) und 0 bis 49 Gew.-%, bevorzugt 0 bis 10 Gew.-%, besonders bevorzugt 0 bis 5 Gew.-% Komponente E) enthalten.

18. Verfahren zur diskontinuierlichen oder kontinuierlichen Herstellung von ein- oder mehrschichtigen Lignocellulosewerkstoffen nach einem der Ansprüche 1 bis 17, **dadurch gekennzeichnet, dass** man die Mischung aus Komponente A) und Komponenten B) als eine im Wesentlichen wasserfreie Mischung einsetzt.

19. Verfahren zur diskontinuierlichen oder kontinuierlichen Herstellung von ein- oder mehrschichtigen Lignocellulosewerkstoffen nach einem der Ansprüche 1 bis 18, **dadurch gekennzeichnet, dass** man als Komponente LCP-1) Holzspäne einsetzt.

**Claims**

1. A process for batchwise or continuous production of single-layer or multilayer lignocellulose materials, comprising the process steps of

    (Ia) producing a mixture M1 and

(Ib) optionally one or more mixture(s) M2,
(II) scattering mixture M1 and optionally mixture(s) M2 to give a mat,
(III) optionally precompacting the scattered mat and
(IV) hot pressing,
wherein mixture M1 comprises the lignocellulose particles (component LCP-1) and additionally

a) 0.005% to 0.5% by weight of organic carboxylic acid, carboxylic anhydride, carbonyl chloride or mixtures thereof (component A)
b) 0.05% to 3% by weight of organic isocyanates having at least two isocyanate groups (component B) and
c) 5% to 15% by weight of binder selected from the group of the amino resins (component C)
d) 0% to 2% by weight of hardener (component D) and
e) 0% to 5% by weight of additive (component E),
and mixture(s) M2 comprise(s) the lignocellulose particles (component LCP-2) and additionally
f) 0% to 0.3% by weight of organic carboxylic acid, carboxylic anhydride, carbonyl chloride or mixtures thereof (component F),
g) 1% to 30% by weight of binder selected from the group consisting of amino resin, phenolic resin, protein-based binder and other polymer-based binders or mixtures thereof (component G-1) and 0% to 3% by weight of organic isocyanate having at least two isocyanate groups (component G-2),
h) 0% to 2% by weight of hardener (component H) and
i) 0% to 5% by weight of additives (component I),

with the proviso that the following conditions are fulfilled:

$$a_{min} < a < a_{max}$$

and

$$a_{min} = [(- 1/6000 \cdot T) + (65/6000)], \text{ preferably } a_{min} = [(- 1/4500 \cdot T) + (65/4500)], \text{ more preferably } a_{min} = [(- 1/3500 \cdot T] + (65/3500)],$$

and

$$a_{max} = [(- 1/2000 \cdot T) + (75/2000)], \text{ preferably } a_{max} = [(- 1/2500 \cdot T) + (75/2500)], \text{ more preferably } a_{max} = [(- 1/3000 \cdot T) + (75/3000)],$$

where

T is the temperature of mixture M1 in °C after process step (Ia) and is between 10 and 65°C, preferably 10 and 60°C, more preferably 15 to 58°C, and
a is the amount of acid equivalents in component A) in relation to the mass of component C) in mol/100 g.

2. The process for batchwise or continuous production of single-layer or multilayer lignocellulose materials according to claim 1, wherein, in process step (Ia), component A) or the mixture of component A) and component B) or the mixture of component A), component B) and component E) and

- component C) or
- a mixture of component C) with one or more components selected from the group of components B), D) and E)
are applied to the lignocellulose particles (component LCP-1)
are applied

(1) separately from one another or

(2) as a mixture within 0.1 to 3600 seconds after production of the mixture
to the lignocellulose particles (component LCP-1).

3. The process for batchwise or continuous production of single-layer or multilayer lignocellulose materials according to claim 1 or 2, wherein some or all of component A) is mixed with component B) or a portion of component B) before it is contacted with the lignocellulose particles (component LCP-1).

4. The process for batchwise or continuous production of single-layer or multilayer lignocellulose materials according to any of claims 1 to 3, wherein all of component A) is mixed with component B) or a portion of component B) before it is contacted with the lignocellulose particles (component LCP-1).

5. The process for batchwise or continuous production of single-layer or multilayer lignocellulose materials according to any of claims 1 to 4, wherein a portion or the entire amount, preferably the entire amount, of component A) is mixed with component B) or a portion of component B) and with component E) or a portion of component E) to give a mixture ABE) before it is contacted with component LCP-1).

6. The process for batchwise or continuous production of single-layer or multilayer lignocellulose materials according to any of claims 1 to 5, wherein component C) which has optionally been mixed in a separate step with one or more components selected from the groups of components B), D) and E), and component A) or the mixture of component A) with component B) or the mixture of component A) with component B) and component E) are added to the lignocellulose particles LCP-1) or to the mixture of lignocellulose particles LCP-1) with one or more components selected from the groups of components B), D) and E) separately from one another or as a mixture within 0.1 to 3600 seconds.

7. The process for batchwise or continuous production of single-layer or multilayer lignocellulose materials according to any of claims 1 to 6, wherein an initial charge of component LCP-1) is mixed with component C) and component D), together or in any sequence, followed by addition of component E) and then of components A) and B), together or in any sequence, preferably together, or of components A) and B), together or in any sequence, preferably together, and then of component E).

8. The process for batchwise or continuous production of single-layer or multilayer lignocellulose materials according to any of claims 1 to 7, wherein an initial charge of component LCP-1) is mixed with component A) and component B), together or in any sequence, preferably together, followed by addition of component E) and then of components C) and D), together or in any sequence, preferably together, or of components C) and D), together or in any sequence, preferably together, and then of component E).

9. The process for batchwise or continuous production of single-layer or multilayer lignocellulose materials according to any of claims 1 to 8, wherein an initial charge of component LCP-1) is mixed with component E), followed by addition of component C) and component D), together or in any sequence, preferably together, then of components A) and B), together or in any sequence, preferably together, or of components A) and B), together or in any sequence, preferably together, and then of component C) and component D), together or in any sequence.

10. The process for batchwise or continuous production of single-layer or multilayer lignocellulose materials according to any of claims 1 to 9, wherein an initial charge of component LCP-1) is mixed with component E), followed by addition of a mixture of components A), B), C) and D).

11. The process for batchwise or continuous production of single-layer or multilayer lignocellulose materials according to any of claims 1 to 10, wherein an initial charge of component LCP-1) is mixed with a mixture of components A), B), C) and D), followed by addition of component E).

12. The process for batchwise or continuous production of single-layer or multilayer lignocellulose materials according to any of claims 1 to 11, wherein an initial charge of component LCP-1) is mixed with a portion of component E), followed by addition of a mixture of a further portion of component E) and components A), B), C) and D).

13. The process for batchwise or continuous production of single-layer or multilayer lignocellulose materials according to any of claims 1 to 12, wherein an initial charge of component LCP-1) is mixed with a mixture of a portion of component E) and components A), B), C) and D), followed by addition of a further portion of component E).

**EP 3 515 990 B1**

14. The process for batchwise or continuous production of single-layer or multilayer lignocellulose materials according to any of claims 1 to 13, wherein carboxylic anhydrides are used as component A), preferably C4 to C8 carboxylic anhydrides such as succinic anhydride, itaconic anhydride and maleic anhydride (MA), more preferably maleic anhydride (MA).

15. The process for batchwise or continuous production of single-layer or multilayer lignocellulose materials according to any of claims 1 to 14, wherein $C_4$ to $C_8$ carboxylic anhydrides are used as component F), such as succinic anhydride, itaconic anhydride and maleic anhydride (MA), more preferably maleic anhydride (MA).

16. The process for batchwise or continuous production of single-layer or multilayer lignocellulose materials according to any of claims 1 to 15, wherein a portion or the entire amount, preferably the entire amount, of component A) is mixed with component B) or a portion of component B) and with component E) or a portion of component E) to give a mixture ABE) before it is contacted with component LCP-1).

17. The process for batchwise or continuous production of single-layer or multilayer lignocellulose materials according to any of claims 1 to 16, wherein mixtures AB) and ABE) comprise 50% to 99% by weight, preferably 70% to 97% by weight, more preferably 80% to 95% by weight, especially 85% to 92% by weight, of component A) and 1% to 50% by weight, preferably 3% to 30% by weight, more preferably 5% to 20% by weight, especially 8% to 15% by weight, of component B), and 0% to 49% by weight, preferably 0% to 10% by weight, more preferably 0% to 5% by weight, of component E).

18. The process for batchwise or continuous production of single-layer or multilayer lignocellulose materials according to any of claims 1 to 17, wherein the mixture of component A) and component B) is used in the form of an essentially anhydrous mixture.

19. The process for batchwise or continuous production of single-layer or multilayer lignocellulose materials according to any of claims 1 to 18, wherein wood shavings are used as component LCP-1).

**Revendications**

1. Procédé de fabrication discontinue ou continue de matériaux lignocellulosiques mono- ou multicouches contenant les étapes de procédé suivantes :

   (Ia) la fabrication d'un mélange M1 et
   (Ib) éventuellement d'un ou de plusieurs mélanges M2,
   (II) la dispersion du mélange M1 et éventuellement du ou des mélanges M2 en un mat,
   (III) éventuellement le pré-compactage du mat dispersé, et
   (IV) la compression à chaud,
   **caractérisé en ce que** le mélange M1 contient les particules lignocellulosiques (composant LCP-1) et en outre

   a) 0,005 à 0,5 % en poids d'acide carboxylique organique, d'anhydride d'acide carboxylique, de chlorure d'acide carboxylique ou leurs mélanges (composant A),
   b) 0,05 à 3 % en poids d'isocyanates organiques contenant au moins deux groupes isocyanate (composant B), et
   c) 5 à 15 % en poids de liants, choisis dans le groupe des résines aminoplastes (composant C),
   d) 0 à 2 % en poids d'agents de durcissement (composant D), et
   e) 0 à 5 % en poids d'additif (composant E),
   et le ou les mélanges M2 contiennent les particules lignocellulosiques (composant LCP-2) et en outre
   f) 0 à 0,3 % en poids d'acide carboxylique organique, d'anhydride d'acide carboxylique, de chlorure d'acide carboxylique ou leurs mélanges (composant F),
   g) 1 à 30 % en poids de liants, choisis dans le groupe constitué par une résine aminoplaste, une résine phénoplaste, un liant à base de protéine et un autre liant à base de polymère ou leurs mélanges (composant G-1) et 0 à 3 % en poids d'un isocyanate organique contenant au moins deux groupes isocyanate (composant (G-2),
   h) 0 à 2 % en poids d'agents de durcissement (composant H), et
   i) 0 à 5 % en poids d'additifs (composant I),

à condition que les conditions suivantes soient satisfaites :

$$a_{min} < a < a_{max}$$

et

$a_{min} = [(-1/6000 \bullet T) + (65/6000)]$, de préférence $a_{min} = [(-1/4500 \bullet T) + (65/4500)]$, de manière particulièrement préférée
$a_{min} = [(-1/3500 \bullet T) + (65/3500)]$

et

$a_{max} = [(-1/2000 \bullet T) + (75/2000)]$, de préférence $a_{max} = [(-1/2500 \bullet T) + (75/2500)]$, de manière davantage préférée $a_{max} = [(-1/3000 \bullet T) + (75/3000)]$,

T étant la température du mélange M1 en °C après l'étape du procédé (Ia) et celle-ci étant comprise entre 10 et 65 °C, de préférence entre 10 et 60 °C, de manière davantage préférée entre 15 à 58 °C et
a étant la quantité d'équivalents d'acide du composant A) rapportée à la masse du composant C) en mol/100 g.

2. Procédé de fabrication discontinue ou continue de matériaux lignocellulosiques mono- ou multicouches selon la revendication 1, **caractérisé en ce que**, dans l'étape de procédé (Ia), le composant A) ou le mélange du composant A) et du composant B) ou le mélange du composant A), du composant B) et du composant E) et

- le composant C) ou
- un mélange du composant C) avec un ou plusieurs composants choisis dans le groupe des composants B), D) ou E)
sont appliqués

(1) séparément les uns des autres ou
(2) sous la forme d'un mélange en 0,1 à 3 600 secondes après la fabrication du mélange
sur les particules lignocellulosiques (composant LCP-1) .

3. Procédé de fabrication discontinue ou continue de matériaux lignocellulosiques mono- ou multicouches selon la revendication 1 ou 2, **caractérisé en ce que** le composant A) est mélangé en partie ou en totalité avec le composant B) ou une quantité partielle du composant B), avant leur mise en contact avec les particules lignocellulosiques (composant LCP-1).

4. Procédé de fabrication discontinue ou continue de matériaux lignocellulosiques mono- ou multicouches selon l'une quelconque des revendications 1 à 3, **caractérisé en ce que** le composant A) est mélangé en totalité avec le composant B) ou une quantité partielle du composant B), avant leur mise en contact avec les particules lignocellulosiques (composant LCP-1).

5. Procédé de fabrication discontinue ou continue de matériaux lignocellulosiques mono- ou multicouches selon l'une quelconque des revendications 1 à 4, **caractérisé en ce qu'**une quantité partielle ou la quantité complète, de préférence la quantité complète, du composant A) est mélangée avec le composant B) ou une quantité partielle du composant B) et avec le composant E) ou une quantité partielle du composant E) en un mélange ABE), avant leur mise en contact avec le composant LCP-1).

6. Procédé de fabrication discontinue ou continue de matériaux lignocellulosiques mono- ou multicouches selon l'une quelconque des revendications 1 à 5, **caractérisé en ce que** le composant C), qui est éventuellement mélangé dans une étape séparée avec un ou plusieurs composants choisis dans les groupes des composants B), D) et E), et le composant A) ou le mélange du composant A) avec le composant B) ou le mélange du composant A) avec le composant B) et le composant E) sont ajoutés séparément les uns des autres ou sous la forme d'un mélange en 0,1 à 3 600 secondes aux particules lignocellulosiques LCP-1) ou au mélange des particules lignocellulosiques LCP-1) avec un ou plusieurs composants choisis dans les groupes des composants B), D) et E).

7. Procédé de fabrication discontinue ou continue de matériaux lignocellulosiques mono- ou multicouches selon l'une quelconque des revendications 1 à 6, **caractérisé en ce que** le composant LCP-1) est chargé initialement, mélangé avec le composant C) et le composant D) ensemble ou dans un ordre quelconque, puis le composant E), puis les composants A) et B), ensemble ou dans un ordre quelconque, de préférence ensemble ou les composants A) et B), ensemble ou dans un ordre quelconque, de préférence ensemble, puis le composant E) sont ajoutés.

8. Procédé de fabrication discontinue ou continue de matériaux lignocellulosiques mono- ou multicouches selon l'une quelconque des revendications 1 à 7, **caractérisé en ce que** le composant LCP-1) est chargé initialement, mélangé avec le composant A) et le composant B) ensemble ou dans un ordre quelconque, de préférence ensemble, puis le composant E), puis les composants C) et D), ensemble ou dans un ordre quelconque, de préférence ensemble, ou les composants C) et D), ensemble ou dans un ordre quelconque, de préférence ensemble, puis le composant E) sont ajoutés.

9. Procédé de fabrication discontinue ou continue de matériaux lignocellulosiques mono- ou multicouches selon l'une quelconque des revendications 1 à 8, **caractérisé en ce que** le composant LCP-1) est chargé initialement, mélangé avec le composant E), puis le composant C) et le composant D) ensemble ou dans un ordre quelconque, de préférence ensemble, puis les composants A) et B), ensemble ou dans un ordre quelconque, de préférence ensemble, ou les composants A) et B), ensemble ou dans un ordre quelconque, de préférence ensemble, puis le composant C) et le composant D) ensemble ou dans un ordre quelconque sont ajoutés.

10. Procédé de fabrication discontinue ou continue de matériaux lignocellulosiques mono- ou multicouches selon l'une quelconque des revendications 1 à 9, **caractérisé en ce que** le composant LCP-1) est chargé initialement, mélangé avec le composant E), puis un mélange des composants A), B), C) et D) est ajouté.

11. Procédé de fabrication discontinue ou continue de matériaux lignocellulosiques mono- ou multicouches selon l'une quelconque des revendications 1 à 10, **caractérisé en ce que** le composant LCP-1) est chargé initialement, mélangé avec un mélange des composants A), B), C) et D), puis le composant E) est ajouté.

12. Procédé de fabrication discontinue ou continue de matériaux lignocellulosiques mono- ou multicouches selon l'une quelconque des revendications 1 à 11, **caractérisé en ce que** le composant LCP-1) est chargé initialement, mélangé avec une quantité partielle du composant E), puis un mélange d'une quantité partielle supplémentaire du composant E) et des composants A), B), C) et D) est ajouté.

13. Procédé de fabrication discontinue ou continue de matériaux lignocellulosiques mono- ou multicouches selon l'une quelconque des revendications 1 à 12, **caractérisé en ce que** le composant LCP-1) est chargé initialement, mélangé avec un mélange d'une quantité partielle du composant E) et des composants A), B), C) et D), puis une quantité partielle supplémentaire du composant E) est ajoutée.

14. Procédé de fabrication discontinue ou continue de matériaux lignocellulosiques mono- ou multicouches selon l'une quelconque des revendications 1 à 13, **caractérisé en ce qu'**en tant que composant A), des anhydrides d'acides carboxyliques, de préférence des anhydrides d'acides carboxyliques en C4 à C8, tels que l'anhydride de l'acide succinique, l'anhydride de l'acide itaconique et l'anhydride de l'acide maléique (MSA), de manière particulièrement préférée l'anhydride de l'acide maléique (MSA), sont utilisés.

15. Procédé de fabrication discontinue ou continue de matériaux lignocellulosiques mono- ou multicouches selon l'une quelconque des revendications 1 à 14, **caractérisé en ce qu'**en tant que composant F), des anhydrides d'acides carboxyliques en $C_4$ à $C_8$, tels que l'anhydride de l'acide succinique, l'anhydride de l'acide itaconique et l'anhydride de l'acide maléique (MSA), de manière particulièrement préférée l'anhydride de l'acide maléique (MSA), sont utilisés.

16. Procédé de fabrication discontinue ou continue de matériaux lignocellulosiques mono- ou multicouches selon l'une quelconque des revendications 1 à 15, **caractérisé en ce qu'**une quantité partielle ou la quantité complète, de préférence la quantité complète, du composant A) est mélangée avec le composant B) ou une quantité partielle du composant B) et avec le composant E) ou une quantité partielle du composant E) en un mélange ABE), avant leur mise en contact avec le composant LCP-1).

17. Procédé de fabrication discontinue ou continue de matériaux lignocellulosiques mono- ou multicouches selon l'une quelconque des revendications 1 à 16, **caractérisé en ce que** les mélanges AB) et ABE) contiennent 50 à 99 % en poids, de préférence 70 à 97 % en poids, de manière particulièrement préférée 80 à 95 % en poids, notamment 85 à 92 % en poids du composant A) et 1 à 50 % en poids, de préférence 3 à 30 % en poids, de manière particulièrement préférée 5 à 20 % en poids, notamment 8 à 15 % en poids du composant B) et 0 à 49 % en poids, de préférence 0 à 10 % en poids, de manière particulièrement préférée 0 à 5 % en poids du composant E).

18. Procédé de fabrication discontinue ou continue de matériaux lignocellulosiques mono- ou multicouches selon l'une quelconque des revendications 1 à 17, **caractérisé en ce que** le mélange du composant A) et du composant B) est utilisé sous la forme d'un mélange essentiellement anhydre.

19. Procédé de fabrication discontinue ou continue de matériaux lignocellulosiques mono- ou multicouches selon l'une quelconque des revendications 1 à 18, **caractérisé en ce que** des copeaux de bois sont utilisés en tant que composant LCP-1).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1852231 B
- WO 2015000913 A
- DE 10247412 A
- DE 10104047 A
- WO 9728936 A
- US 5112875 A
- WO 9902591 A
- DE 4003422 A
- EP 1240205 A
- DE 19991049592 A

**In der Beschreibung aufgeführte Nicht-Patentliteratur**

- **ZEPPENFELD ; GRUNWALD.** Klebstoffe in der Holz- und Möbelindustrie. DRW Verlag, 2005, 286
- **M. DUNKY ; P. NIEMZ.** Holzwerkstoffe und Leime. Springer Verlag, 2002, 118-119, 145
- **M. DUNKY ; P. NIEMZ.** Holzwerkstoffe und Leime. Springer Verlag, 2002, 119-121
- **M. DUNKY ; P. NIEMZ.** Holzwerkstoffe und Leime. Springer Verlag, 2002, 819
- **H.-J. DEPPE ; K. ERNST.** MDF - Mitteldichte Faserplatte. DRW-Verlag, 1996, 44, , 45, , 91
- **A. WAGENFÜHR ; F. SCHOLZ.** Taschenbuch der Holztechnik. Fachbuchverlag Leipzig, 2012, 219
- **H.-J. DEPPE ; K. ERNST.** Taschenbuch der Spanplatten Technik. DRW - Verlag Weinbrenner, 2000, 232-254
- **H.-J. DEPPE ; K. ERNST.** MDF- Mitteldichte Faserplatten. DRW- Verlag Weinbrenner, 1996, 93-104
- **M. DUNKY ; P. NIEMZ.** Holzwerkstoffe und Leime. Springer Verlag, 2002, 91-156
- Polystyrol. Kunststoff Handbuch 1996. Hanser, 1996, vol. 4, 640-673
- **GÜNTER ZEPPENFELD ; DIRK GRUNWALD.** Klebstoffe in der Holz- und Möbelindustrie. DRW-Verlag, 268
- Duroplaste. Kunststoff-Handbuch. Hanser, 1988, vol. 10, 12-40
- Aminoplaste. Ullmanns Enzyklopädie der technischen Chemie. Verlag Chemie, 1973, 403-424
- Ullmann's Encyclopedia of Industrial Chemistry. VCH Verlagsgesellschaft, 1985, vol. A2, 115-141
- Amino Resins. **M. DUNKY ; P. NIEMZ.** Holzwerkstoffe und Leime. Springer, 2002, 251-259, 303-313
- **M. DUNKY ; P. NIEMZ.** Holzwerkstoffe und Leime. Springer, 2002, 415-417
- **A. ECHTE.** Handbuch der Technischen Polymerchemie. VCH, 1993
- **B. VOLLMERT.** Grundriss der Makromolekularen Chemie. E. Vollmert Verlag, 1988, vol. 1
- Encyclopedia of Polymer Science and Engineering. 1987, vol. 8, 659 ff
- **D.C. BLACKLEY.** High Polymer Latices. 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- Polyurethane. **BECKER ; BRAUN.** Kunststoff Handbuch. Hanser, 1993, vol. 7, 17-21, 76-88, 665-671
- Polyurethane. **BECKER ; BRAUN.** Kunststoff Handbuch. Hanser, 1993, vol. 7, 18
- **M. DUNKY ; P. NIEMZ.** Holzwerkstoffe und Leime. Springer, 2002, 265-269
- International Ed. or North American Ed. **MCCUTCHEON'S.** Emulsifiers & Detergents, McCutcheon's Directories. 2008, vol. 1
- **M. DUNKY ; P. NIEMZ.** Holzwerkstoffe und Leime. Springer, 2002, 341-352